# EUROPEAN PATENT APPLICATION

(11) **EP 3 702 904 A1**
(43) Date of publication of application: **02.09.2020**
(21) Application number: 18870377.1
(22) Date of filing: 09.10.2018
(51) Int. Cl.: G06F 3/16, G06F 3/01, G10L 15/10

(54) **INFORMATION PROCESSING DEVICE AND INFORMATION PROCESSING METHOD**

(30) Priority: 23.10.2017 JP 2017204196
(71) Applicant: Sony Corporation, Tokyo 108-0075 (JP)
(72) Inventor: MAEDA Yoshinori, Tokyo 108-0075 (JP)
(74) Representative: MFG Patentanwälte Meyer-Wildhagen Meggle-Freund Gerhard PartG mbB
(86) International application number: PCT/JP2018/037499
(87) International publication number: WO 2019/082630

(57) **Abstract**

The present technology relates to an information processing device and an information processing method for enabling a response in accordance with an intention of a user.

Provided is an information processing device including a processing unit configured to calculate a selection probability used when selecting a selection target according to an intention of a user on the basis of utterance information regarding an utterance of the user obtained from an interaction with the user, and select the selection target from among selection target candidates according to the selection probability. The present technology can be applied to a home console system including, for example, a home console such as a smart speaker.

## Description

### TECHNICAL FIELD

The present technology relates to an information processing device and an information processing method, and more particularly to an information processing device and an information processing method for enabling a response in accordance with an intention of a user.

### BACKGROUND ART

In recent years, voice interaction systems that respond to users' utterances have begun to be used in various fields. For example, by using a voice interaction system, when a user asks the system "Where are we?", an answer of "We are in Central Park" is returned.

Furthermore, with an increase in electronic devices connectable to a network, it is becoming common to construct a home network in which a plurality of devices is connected to a home LAN. For example, Patent Document 1 discloses a technology for controlling a device connected to a home network according to user's lifestyle, living environment, or user's preference.

### CITATION LIST

### PATENT DOCUMENT

Patent Document 1: Japanese Patent Application Laid-Open No. 2003-111157

### SUMMARY OF THE INVENTION

### PROBLEMS TO BE SOLVED BY THE INVENTION

By the way, in a case of controlling a plurality of devices connected to the home network according to the user's utterance, it is required to control a device according to an intention of the user and to make a response because there is the plurality of devices to be controlled.

The present technology has been made in view of such a situation, and enables a response in accordance with an intention of a user.

### SOLUTIONS TO PROBLEMS

An information processing device according to one aspect of the present technology is an information processing device including a processing unit configured to calculate a selection probability used when selecting a selection target according to an intention of a user on the basis of utterance information regarding an utterance of the user obtained from an interaction with the user, and select the selection target from among selection target candidates according to the selection probability.

An information processing method according to one aspect of the present technology is an information processing method of an information processing device, the information processing method, by the information processing device, including calculating a selection probability used when selecting a selection target according to an intention of a user on the basis of utterance information regarding an utterance of the user obtained from an interaction with the user, and selecting the selection target from among selection target candidates according to the selection probability.

In the information processing device and the information processing method according to one aspect of the present technology, a selection probability used when selecting a selection target according to an intention of a user is calculated on the basis of utterance information regarding an utterance of the user obtained from an interaction with the user, and the selection target is selected from among selection target candidates according to the selection probability.

The information processing device according to one aspect of the present technology may be an independent device or may be internal blocks constituting one device.

### EFFECTS OF THE INVENTION

According to one aspect of the present technology, a response in accordance with the user's intention can be performed.

Note that effects described here are not necessarily limited, and any of effects described in the present disclosure may be exhibited.

### BRIEF DESCRIPTION OF DRAWINGS

Fig. 1 is a block diagram illustrating a configuration example of an embodiment of a home console system to which the present technology is applied.
Fig. 2 is a diagram illustrating an example of home appliances installed in a house.
Fig. 3 is a flowchart for describing a flow of target device control processing according to an interaction.
Fig. 4 is a diagram illustrating a first example of a user action log recorded in an action history DB.
Fig. 5 is a diagram illustrating an example of selection scores of operation candidate devices at the time of operating a television.
Fig. 6 is a diagram illustrating a second example of a user action log recorded in the action history DB.
Fig. 7 is a diagram illustrating a third example of a user action log recorded in the action history DB.
Fig. 8 is a diagram illustrating a first example of a power consumption for each socket of an outlet.
Fig. 9 is a diagram illustrating a second example of a power consumption for each socket of an outlet.
Fig. 10 is a diagram illustrating a first example of selection scores of operation candidate devices at the time of operating a heater.
Fig. 11 is a diagram illustrating a second example of selection scores of operation candidate devices at the time of operating a heater.
Fig. 12 is a diagram illustrating a third example of selection scores of operation candidate devices at the time of operating a heater.
Fig. 13 is a diagram illustrating a fourth example of selection scores of operation candidate devices at the time of operating a heater.
Fig. 14 is a diagram illustrating a first example of selection scores of operation candidate devices at the time of operating a power supply.
Fig. 15 is a diagram illustrating a second example of selection scores of operation candidate devices at the time of operating a power supply.
Fig. 16 is a diagram illustrating a first example of selection scores of operation candidate devices at the time of operating a heater from a place outside a house.
Fig. 17 is a diagram illustrating a second example of selection scores of operation candidate devices at the time of operating a heater from a place outside the house.
Fig. 18 is a diagram illustrating an example of tendency scores of cooking ingredients of a user.
Fig. 19 is a diagram illustrating a fourth example of a user action log recorded in the action history DB.
Fig. 20 is a diagram illustrating an interaction sequence of a second example of a reminder function.
Fig. 21 is a diagram illustrating an interaction sequence of a third example of the reminder function.
Fig. 22 is a diagram illustrating an example of schedule information recorded in a schedule DB.
Fig. 23 is a block diagram illustrating another configuration example of the embodiment of the home console system to which the present technology is applied.
Fig. 24 is a block diagram illustrating a configuration example of a computer.

### MODE FOR CARRYING OUT THE INVENTION

Hereinafter, embodiments of the present technology will be described with reference to the drawings. Note that the description will be given in the following order.

1. Embodiment of Present Technology
2. Modification
3. Configuration of Computer

### <1. Embodiment of Present Technology>

### (Configuration Example of Home Console System)

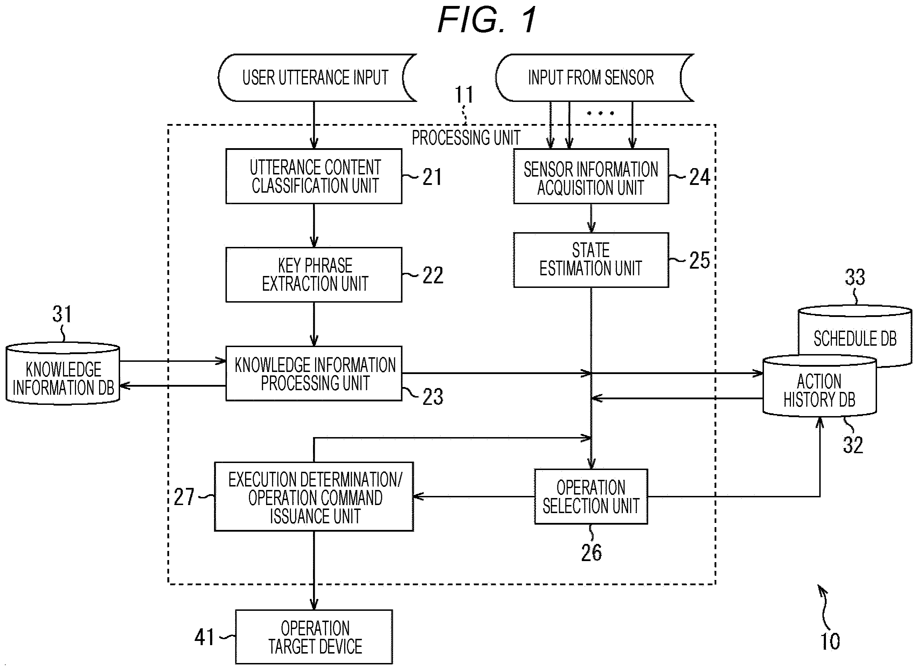

Fig. 1 is a block diagram illustrating a configuration example of an embodiment of a home console system to which the present technology is applied.

The home console system is connected to all or some of home appliances in a house and can acquire states of those home appliances and perform operations according to the states. Furthermore, the home console system is connected to various sensors installed in the house and can analyze sensing results to recognize a state of a user in a room.

The home console system includes a home console 10. The home console 10 is a speaker connectable to a network and is also referred to as, for example, a so-called smart speaker or home agent. This type of speaker can perform, for example, voice interaction with the user and voice operations for devices such as lighting equipment and air conditioning equipment, in addition to playback of music.

Note that the home console 10 is not limited to a speaker, and may be configured as an electronic device such as a personal computer, a television receiver, a game machine, a tablet computer, or a mobile device such as a smartphone or a mobile phone.

The home console 10 includes a processing unit 11, a knowledge information DB 31, an action history DB 32, and a schedule DB 33.

The processing unit 11 is configured by, for example, a central processing unit (CPU), a microprocessor, and the like. The knowledge information DB 31, the action history DB 32, and the schedule DB 33 are recorded as databases on an external server or a recording device (for example, a hard disk drive (HDD) or a semiconductor memory) built in the home console 10.

Furthermore, the processing unit 11 includes an utterance content classification unit 21, a key phrase extraction unit 22, a knowledge information processing unit 23, a sensor information acquisition unit 24, a state estimation unit 25, an operation selection unit 26, and an execution determination/operation command issuance unit 27. Note that the utterance content classification unit 21 to the execution determination/operation command issuance unit 27 are realized by, for example, the processing unit 11 as a CPU executing a program.

The utterance content classification unit 21, the key phrase extraction unit 22, and the knowledge information processing unit 23 provide an utterance semantic analysis function for analyzing meaning of an utterance on the basis of the user's utterance input.

The utterance content classification unit 21 processes a voice signal of the user's utterance collected by a microphone (not illustrated) built in the home console 10, classifies the content of the utterance, and supplies an utterance content classification result obtained as a result of the classification to the key phrase extraction unit 22. Note that, here, voice recognition processing for the voice signal is performed, and the content of the utterance of text information obtained by the voice recognition processing is classified.

The key phrase extraction unit 22 extracts a key phrase included in the user's utterance on the basis of the utterance content classification result supplied from the utterance content classification unit 21 and supplies the key phrase to the knowledge information processing unit 23.

The knowledge information processing unit 23 performs a semantic analysis for the user's utterance on the basis of the key phrase extraction result supplied from the key phrase extraction unit 22 on the basis of knowledge information recorded in the knowledge information DB 31. The knowledge information processing unit 23 supplies an utterance semantic analysis result (hereinafter also referred to as utterance information) to the operation selection unit 26.

In this utterance semantic analysis, the meaning of the utterance is expressed in the form of an "operation command" that the user wants to execute and "attached information" serving as a parameter of the operation command. Here, there is a possibility that a plurality of pieces of attached information is given to one operation command, and one or a plurality of these sets is output as the utterance semantic analysis result.

For example, in a case where the user has uttered "I want to check the next week's schedule", the "operation command" is "schedule presentation" and the "attached information" is the next week of "2017/9/11 (Monday) to 2017/9/17 (Sunday)" in a case where the day is "2017/9/8 (Friday)".

Note that the knowledge information DB 31 records the knowledge information collected from outside or registered by the user himself/herself. This knowledge information is obtained by, for example, making knowledge such as facts, common senses, and experiences into a database in a format that can be interpreted by a computer.

The sensor information acquisition unit 24 and the state estimation unit 25 provide a user state grasping function for recognizing a current state of the user on the basis of an input from a sensor.

The sensor information acquisition unit 24 acquires the sensor information obtained as a result of sensing by one or a plurality of sensors installed in the house, and supplies the sensor information to the state estimation unit 25.

The state estimation unit 25 estimates the current state of the user or a surrounding state of the user on the basis of the sensor information supplied from the sensor information acquisition unit 24, and supplies an estimation result (hereinafter also referred to as state information) obtained as a result of the estimation to the operation selection unit 26. Furthermore, the state estimation unit 25 records the state information indicating the current state of the user in the action history DB 32 as a user action log.

The action history DB 32 records the user action logs in chronological order as user's action history information. Note that information such as user's position information and the state information may be acquired from a mobile terminal device (for example, a mobile terminal device 50 to be described below such as a smartphone or a wearable terminal) possessed by the user, and the information may be recorded together with time information in the action history DB 32 as the user action log. That is, the user action log includes not only the state when the user is in the house but also the state of the user in a place outside the house.

The schedule DB 33 records user's schedule as registration information in chronological order. Note that the schedule may be registered by the user operating a device such as the mobile terminal device or a personal computer or may be registered by the home console 10 recognizing the user's utterance.

Note that the action history DB 32 and the schedule DB 33 may record not only the information regarding the user but also action history information and registration information of other users such as information regarding the family of the user, for example.

The operation selection unit 26 provides an operation selection function for selecting an operation target device (that is, selecting an action provided to the user) from among operation target device candidates (hereinafter also referred to as operation candidate devices) according to user's intention.

Here, the selection of the operation target device and determination of operation content executed by the operation selection unit 26 are executed in consideration of, for example, a state in the house, in addition to the user's utterance semantic analysis result, the current state of the user, the user action log, and the like. Note that the operation target device can be, for example, electric machinery and appliance such as a home appliance installed in the house.

The utterance information from the knowledge information processing unit 23 and the state information from the state estimation unit 25 are supplied to the operation selection unit 26. Furthermore, the operation selection unit 26 appropriately acquires the user action log (action history information) recorded in the action history DB 32 or schedule information (registration information) recorded in the schedule DB 33.

The operation selection unit 26 selects the operation target device from among the operation candidate devices on the basis of at least one of the utterance information, the state information, the action history information, or the registration information, and supplies a selection result to the execution determination/operation command issuance unit 27.

Note that, although details will be described below, when selecting the operation target device, for example, the operation selection unit 26 calculates an operation probability (score) of each operation candidate device, thereby selecting the operation target device uniquely specified according to the calculated operation probability.

Furthermore, the operation selection unit 26 can determine the operation content of the selected operation target device on the basis of information regarding the selected operation target device (hereinafter also referred to as device information), the user's intention obtained from the utterance information, and the like, and can include the operation content in the operation target device selection result to be supplied to the execution determination/operation command issuance unit 27.

The execution determination/operation command issuance unit 27 provides a selection result/execution determination function for issuing the operation command according to the operation target device selection result. Here, as the operation of the operation target device, an operation that is immediately executed, and an operation that is executed in a case where a predetermined condition is satisfied are present. Note that, as the predetermined condition, a condition determined in advance included in the home console system and a condition that can be freely set by the user are present.

The execution determination/operation command issuance unit 27 determines whether or not to immediately execute the operation of an operation target device 41 on the basis of the operation target device selection result supplied from the operation selection unit 26.

In a case of determining to immediately execute the operation, the execution determination/operation command issuance unit 27 issues the operation command according to the operation content to the operation target device 41 and controls the operation of the operation target device 41. In a case of determining not to immediately execute the operation, the execution determination/operation command issuance unit 27 notifies the operation selection unit 26 of the determination.

The home console system is configured as described above.

### (Home Appliances Installation Examples)

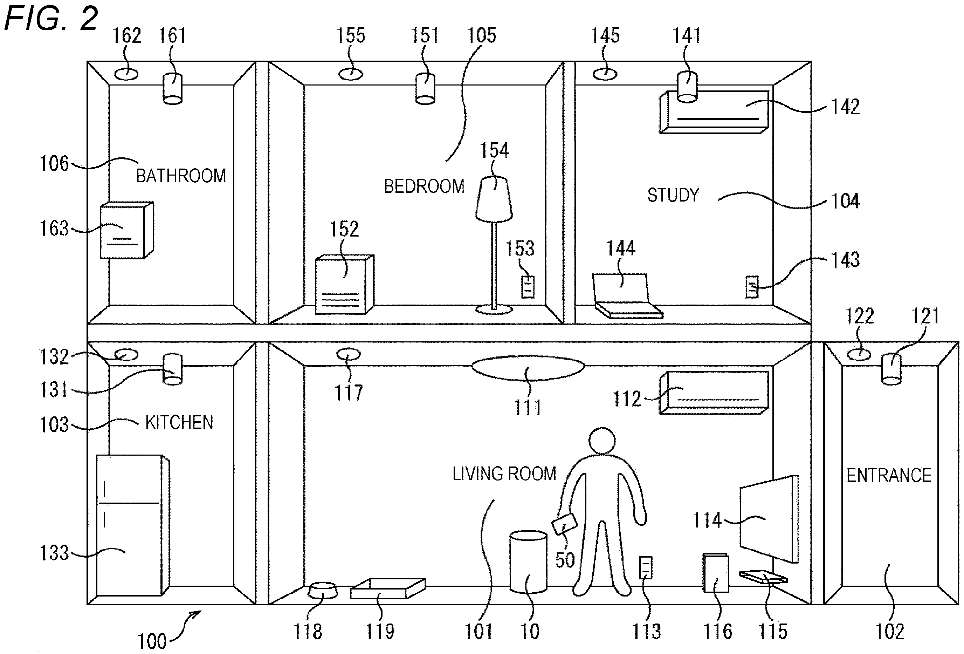

Fig. 2 is a diagram illustrating an example of home appliances installed in the house where the user lives.

A house 100 is a two-story building with a living room 101, an entrance 102, and a kitchen 103 on a first floor, and a study 104, a bedroom 105, and a bathroom 106 on a second floor.

The living room 101 is provided with a light 111 capable of illuminating the entire room, an air conditioner 112 that adjusts the temperature and humidity of the air in the room, and an outlet 113 embedded in a wall. Furthermore, in the living room 101, AV devices such as a television receiver (hereinafter abbreviated as television) 114 and a recorder 115, and a game machine 116 are installed, in addition to the home console 10.

Moreover, a sensor 117 capable of sensing the entire room is attached to a ceiling of the living room 101. As the sensor 117, various sensors can be included, such as an image sensor that captures an object and generates a captured image, an infrared sensor that detects (the temperature of) the object by infrared light, a temperature sensor that detects the temperature, a humidity sensor that detects the humidity, and an ambient light sensor that detects ambient brightness.

Note that the user keeps a cat as a pet, and thus the living room 101 is provided with a cat food container 118 and a cat sand container 119.

A light 121 and a sensor 122 are provided on the ceiling of the entrance 102. A light 131 and a sensor 132 are also provided on the ceiling of the kitchen 103. A refrigerator 133 is installed in the kitchen 103. Note that, as the sensor 122 and the sensor 132, various sensors such as an image sensor and an infrared sensor can be provided, for example.

A light 141, an air conditioner 142, and an outlet 143 are provided in the study 104. Furthermore, a personal computer (hereinafter abbreviated as PC) is installed in the study 104. Moreover, a sensor 145 such as an image sensor or a temperature sensor is also attached to the ceiling of the study 104.

A light 151, a heater 152, and an outlet 153 are provided in the bedroom 105. Furthermore, a lamp 154 is installed in the bedroom 105. Moreover, a sensor 155 such as an image sensor or a temperature sensor is also attached to the ceiling of the bedroom 105.

A light 161 and a sensor 162 are provided on the ceiling of the bathroom 106. Furthermore, a water heater 163 for filling and heating the bath is provided in the bathroom 106.

Here, in the house 100, the home appliances installed in the rooms have a communication function, are connected to a network such as a home local area network (LAN) as a home network, and configure the home console system based on the home console 10. That is, the home appliances installed in the rooms of the house 100 are the operation candidate devices, and can be the operation target devices 41 (Fig. 1) controlled by the home console 10.

Note that the communication method for connecting each home appliance is not limited to the home LAN (Wi-Fi (registered trademark)), and for example, wireless communication conforming to a method such as Bluetooth (registered trademark) or wired communication conforming to a method such as Ethernet (registered trademark) may be used.

Furthermore, Fig. 2 illustrates a case in which the user is in the living room 101. However, in the following description, a case in which the user moves from room to room in the house 100 or a case in which the user goes out will be described. Furthermore, in the following description, a case in which the user has a family living together in the house 100 will be described.

Moreover, it is assumed that the user owns the mobile terminal device 50 and carries the mobile terminal device 50 when going out. The mobile terminal device 50 may be, for example, a wearable device (for example, wristwatch-type, bracelet-type, spectacle-type, or ring-type device) that the user can wear and carry around, other than a mobile device such as a smartphone or a mobile phone.

The mobile terminal device 50 includes a communication module that implements a cellular communication protocol such as long term evolution (LTE), LTE-advanced (LTE-A), or 5th generation (5G), and can communicate with the home console system built in the house 100 via a network such as a mobile phone network. Furthermore, the mobile terminal device 50 includes a global positioning system (GPS) module, and can acquire position information calculated from a GPS signal.

Moreover, the mobile terminal device 50 includes various sensors. For example, as the sensors, a magnetic sensor that detects the magnitude and direction of a magnetic field (magnetic field), an acceleration sensor that detects acceleration, a gyro sensor that detects an angle (posture), an angular velocity, and angular acceleration, a proximity sensor that detects an approaching object, a biological sensor that detects biological information such as a fingerprint, an iris, and a pulse can be included in addition to an image sensor. The state information indicating the user's state can be obtained on the basis of the sensor information obtained from these sensors, for example.

### (Target Device Control Processing Flow)

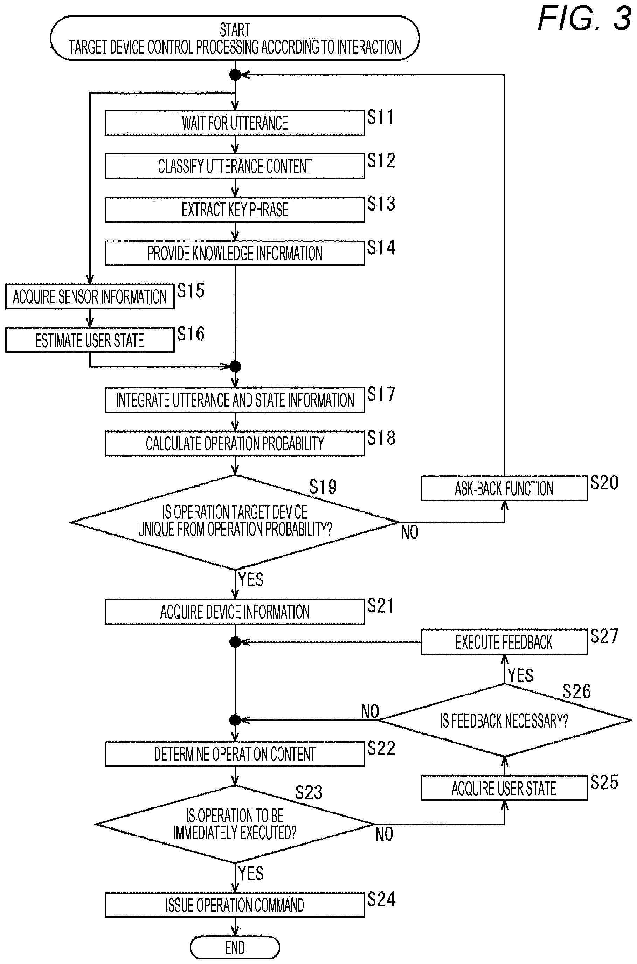

Next, a flow of target device control processing according to an interaction between the user and the system, the processing being executed by the home console system, will be described with reference to the flowchart in Fig. 3.

The home console system waits for an utterance by the user (S11), and the processing proceeds to step S12 in a case where the utterance is made by the user.

In step S12, the utterance content classification unit 21 classifies the content of the user's utterance by processing the voice signal of the user's utterance collected by the microphone.

In step S13, the key phrase extraction unit 22 extracts a key phrase included in the user's utterance on the basis of the classification result of the utterance content obtained in the processing in step S12.

In step S14, the knowledge information processing unit 23 performs the semantic analysis for the user's utterance on the basis of the extraction result of the key phrase obtained in the processing in step S13, and gives the knowledge information obtained from the knowledge information DB 31 to the key phrase.

In step S15, the sensor information acquisition unit 24 acquires the sensor information obtained from the plurality of sensors (for example, the sensor 117, the sensor 145, the sensor 155, and the like in Fig. 2) installed in the house 100.

In step S16, the state estimation unit 25 estimates the current state of the user on the basis of the sensor information obtained in the processing in step S15. Note that, here, not only the user's state but also a state of each room in the house 100 and the like, for example, may be estimated on the basis of the sensor information.

When the user makes an utterance as described above, the processing in steps S11 to S14 is executed, so that the utterance information is obtained by the utterance semantic analysis function, and the processing proceeds to step S17. Furthermore, when the processing in steps S15 and S16 is executed regardless of the utterance by the user, the state information is obtained by the user state grasping function, and the processing proceeds to step S17. Note that the state information may include the position information indicating the current position of the user.

In step S17, the operation selection unit 26 integrates the utterance information obtained by the utterance semantic analysis function and the estimation result of the state information obtained by the user state grasping function.

In step S18, the operation selection unit 26 calculates the operation probability (score) of the operation candidate device connected to the home network on the basis of an integration result obtained in the processing in step S17. Note that, when calculating the operation probability (score) of the operation candidate device, other information such as the action history information and the registration information may be used in addition to the utterance information and the state information.

Here, as the method of calculating the operation probability (score) of the operation candidate device, the operation probability (score) can be calculated by executing an algorithm using various parameters obtained from the information such as the utterance information, the state information, the action history information, and the registration information. A known technique disclosed in various documents can be used as the calculation method.

In step S19, the operation selection unit 26 determines whether or not the operation target device is uniquely specified from the operation candidate devices on the basis of the operation probability (score) obtained in the processing in step S18. In step S19, in a case where the operation target device is determined not to be uniquely specified, the processing proceeds to step S20.

In step S20, the processing unit 11 (the operation selection unit 26) makes a response for making the operation target device unique to the user who has made the utterance (ask-back function). When the user makes an utterance (answers) to the response (inquiry) by the ask-back function, the processing in steps S11 to S14 is executed again, and the utterance information obtained by the utterance semantic analysis function is integrated with the state information obtained by the user state grasping function (S17).

Then, the operation probability (score) of the operation candidate device is recalculated (S18), and in a case where the operation target device is determined to be unique in the second determination processing in step S19, the processing proceeds to step S21. Note that, in a case where the operation target device is determined not to be unique in the second determination processing in step S19, the above-described processing is repeated until the operation target device is determined to be unique ("YES" in S19).

That is, when the processing in steps S11 to S20 is repeatedly performed, the operation probability (score) of the operation candidate device is dynamically updated on the basis of the information such as the interaction information and the state information repeatedly obtained according to the interaction with the user. As a result, the operation target device is uniquely specified from the operation candidate devices according to the updated operation probability.

In step S21, the operation selection unit 26 requests the operation target device, which has been determined to be unique in the processing in step S19, to transmit the device information via the home network, thereby acquiring the device information of the operation target device. Note that the device information may be acquired in advance before the operation target device is uniquely specified.

In step S22, the operation selection unit 26 determines the operation content of the operation target device on the basis of the device information obtained in the processing in step S21, the user's intention obtained from the utterance information and the like, and the like. Here, for example, in a case where the operation target device is the television 114, "power on" is determined as the operation content. Furthermore, when determining the operation content of the operation target device, other information such as the action history information, the state information, and the registration information may be used.

In step S23, the execution determination/operation command issuance unit 27 determines whether or not the operation content of the operation target device determined in the processing in step S22 is an operation to immediately execute.

In a case where the operation content is determined to be the operation to immediately execute in step S23, the processing proceeds to step S24. In step S24, the execution determination/operation command issuance unit 27 issues the operation command according to the operation content to the operation target device 41 selected from the home appliances installed in the house 100 to control the operation of the operation target device 41.

On the other hand, in a case where the operation content is determined not to be the operation to immediately execute in step S23, the processing proceeds to step S25. In step S25, the operation selection unit 26 acquires the state information obtained by the user state grasping function.

In step S26, the operation selection unit 26 determines whether or not a feedback is necessary for the user who has made the utterance on the basis of the state information obtained in the processing in step S25.

In a case where it is determined in step S26 that a feedback is not necessary, the processing proceeds to step S22. Here, the operation selection unit 26 redetermines the operation content of the operation target device on the basis of the state information obtained in the processing in step S25 (S22). Then, whether the operation content redetermined in the processing in step S22 is an operation to immediately execute is determined in the determination processing in step S23.

Furthermore, in a case where it is determined in step S26 that a feedback is necessary, the processing proceeds to step S27. In step S27, the processing unit 11 (operation selection unit 26) executes a feedback to the user who has made the utterance.

Then, the operation selection unit 26 redetermines the operation content of the operation target device on the basis of the feedback result obtained in the processing in step S27 (S22), and whether or not the redetermined operation content is an operation to immediately execute is determined (S23).

Thereafter, in a case where the redetermined operation content is determined to be the operation to immediately execute in step S23, the processing proceeds to step S24. Then, in step S24, the execution determination/operation command issuance unit 27 issues the operation command according to the redetermined operation content to the operation target device 41 to control the operation of the operation target device 41.

For example, in a case where the user has uttered "Heat the bath", the home console system estimates when to start heating the bath according to the current position of the user, the state of the water heater 163 in the house 100, the current temperature, and the like, and issues the operation command to the water heater 163.

Here, in a condition designed by the home console system, the bath is heated in accordance with the time when the user comes home in the case where the user is out of the house. Note that, in a case where heating of the bath cannot be completed by the time when the user comes home, the home console system feeds back the fact to the user. Furthermore, in a case where the user is at home, the home console system immediately issues the operation command to the water heater 163. Note that the user can freely set such conditions.

Furthermore, for example, in the case where the user has uttered "Heat the bath" while on the go, the home console system causes the water heater 163 to fill the bath with hot water in accordance with the time when the user comes home. In a case where the user has not taken a bath soon after coming home, the home console system notifies the user that "The bath has been heated".

Thereafter, the home console system may feedback alternatives such as "Would you like to re-heat the bathtub water after xx minutes?" to the user. Here, when recognizing that the user has not enjoyed the operation result, the home console system uses information such as the state information (for example, an action of the user or the like) and the device information (for example, an elapsed time since the bath has been heated).

Note that, here, an example in which the state information is acquired in the processing in step S25 has been described. However, for example, other information such as the action history information and the registration information may be acquired and used in the subsequent processing.

Heretofore, the flow of the target device control processing according to the interaction between the user and the system has been described. Next, a more specific example of the target device control processing corresponding to the interaction between the user and the system will be described.

Note that, in the following description, the environment in the house 100 when the interaction is performed is as illustrated in Fig. 2. Furthermore, the control of the operation target device executed according to the interaction is performed along each step of the flowchart in Fig. 3. Note that, in the following description, the user's utterance in the interaction is written as "U (User)", and the response of the home console system is written as "S (System)".

### (A) Example of TV operation (time: around 20:00 on weekdays, place: living room)

First, an example of an interaction sequence between the user and the home console system in a case where the operation of the television 114 is performed in the living room 101 at around 20:00 on weekdays according to the user's utterance will be described.

### «Around 20:00 after coming home»

U: "Turn on the television".
S: "Tuning on XYZ broadcast station".

### <<21:00 after one hour>>

U: "Turn it off".
S: "Turning off the television".

In the example of the television operation, the home console system recognizes that the intention of the user's utterance of "Turn on the television" is to "turn on the television". That is, in this example, the operation target device is the television 114, and the operation content is power on.

Furthermore, the home console system can recognize an action pattern of the user at the time of watching the television, for example, from the action history of the user's life so far.

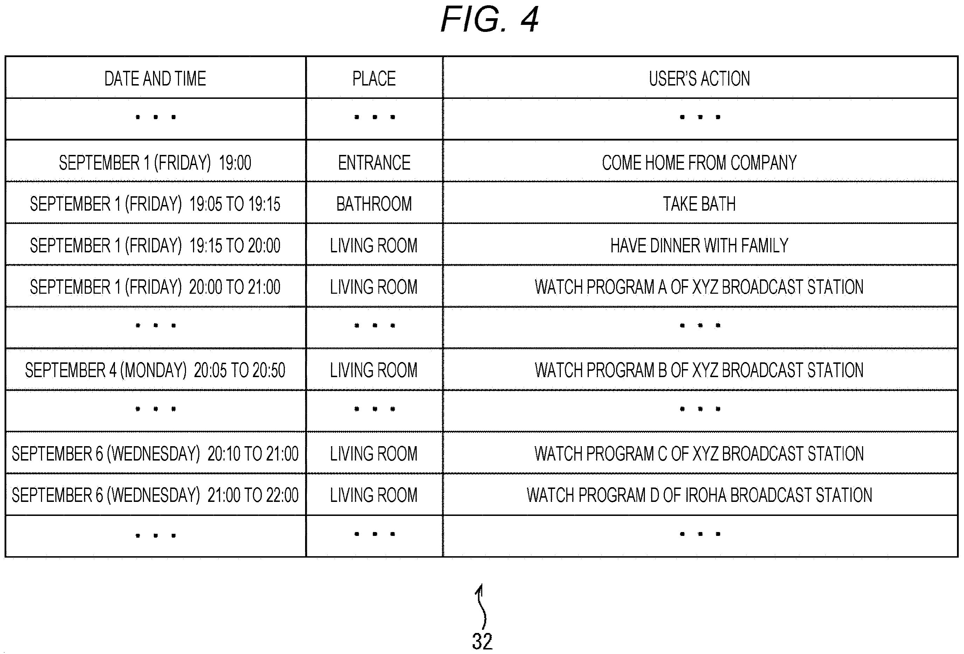

Fig. 4 illustrates an example of a user action log recorded in the action history DB 32. In Fig. 4, the user watching programs of the XYZ broadcast station in time zones such as September 1 (Friday) 20:00-21:00, September 4 (Monday) 20:05-20:50, September 6 (Wednesday) 20:10-21:00, and the like is recorded as the user action log.

The home console system can recognize that a possibility that the user watches a program of the XYZ broadcast station at around 20:00 on weekdays is high by analyzing the user action log illustrated in Fig. 4.

Thus, the home console system selects a channel of the XYZ broadcast station when turning on the television 114 in the living room 101 according to the user's utterance of "Turn on the television". Then, the home console system makes a response of "Turning on XYZ broadcast station". When the television 114 is powered on and activated, the television 114 first displays a program of the XYZ broadcast station.

In a case where the user has uttered "Turn it off" after watching the program at around 21:00, which is one hour later, the intention of the user's utterance is not necessarily clear. Therefore, the home console system executes termination processing of selecting the most correct one as a target for an action to turn off from among the home appliances (operation candidate devices) being used by the user at the point of time, and turning off the selected home appliance (operation target device).

At this time, it is assumed that the light 111, the air conditioner 112, the recorder 115, and the game machine 116 are present in addition to the television 114 as the home appliances that can be "turned off" in the living room 101. The home console system determines that the possibility that the home appliance having been used so far is the television 114 is high and relevance with other devices is low at the point of time when recognizing the user's utterance of "Turn it off" on the basis of use states of the home appliances by the user, an interaction sequence, and the like, and turns off the television.

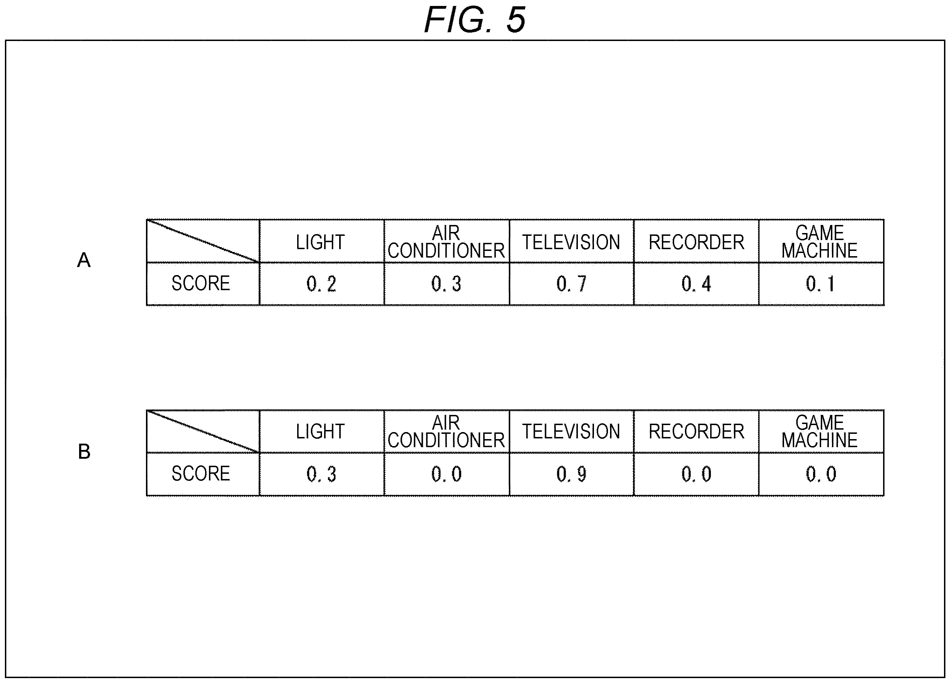

Fig. 5 illustrates examples of selection scores of the operation candidate devices at the time of operating the television.

Fig. 5 illustrates, as the operation candidate devices, the light 111, the air conditioner 112, the television 114, the recorder 115, and the game machine 116 installed in the living room 101. Furthermore, a score range is from 0.0 to 1.0, and the minimum value of the score is 0.0 and the maximum value of the score is 1.0.

A in Fig. 5 illustrates an example of the selection scores of when the user has uttered "Turn on the television" at around 20:00. In A in Fig. 5, 0.2, 0.3, 0.7, 0.4, and 0.1 are calculated as the selection scores for the light 111, the air conditioner 112, the television 114, the recorder 115, and the game machine 116, respectively.

In this case, since the television 114 having the score (motion probability) of 0.7 calculated is the operation candidate device with the highest score (operation probability), the home console system selects the television 114 as the operation target device and performs control to turn on the power as the operation content.

Furthermore, B in Fig. 5 illustrates an example of the selection scores of when the user has uttered "Turn it off" at around 21:00. In B in Fig. 5, 0.3, 0.0, 0.9, 0.0, and 0.0 are calculated as the selection scores for the light 111, the air conditioner 112, the television 114, the recorder 115, and the game machine 116, respectively.

In this case, since the television 114 having the score (motion probability) of 0.9 calculated is the operation candidate device with the highest score (operation probability), the home console system selects the television 114 as the operation target device and performs control to turn off the power.

### (B) Example of PC operation (time: around 7:00 on holidays, place: bedroom)

Next, an example of an interaction sequence between the user and the home console system in a case where the operation of the PC 144 is performed in the bedroom 105 at around 7:00 in holiday mornings according to the user's utterance will be described.

### (First Example)

U: "Prepare the study".
S: "Booted the computer. Turned on the heater. 26°C has been set".

In a first example of the PC operation, the home console system recognizes that the intention of the user's utterance of "Prepare the study" is to "use the study". Furthermore, the home console system can recognize an action pattern of the user at the time of using the study, for example, from the action history of the user's life so far.

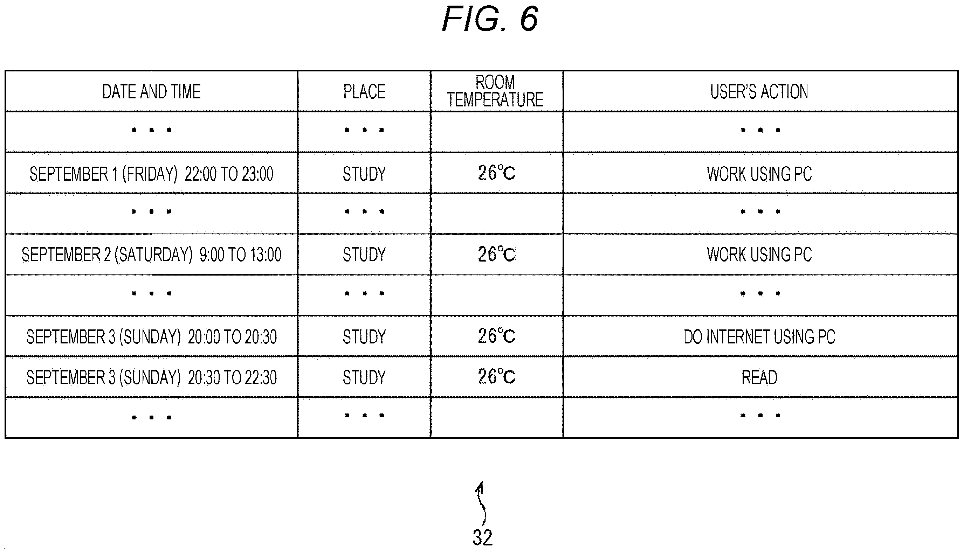

Fig. 6 illustrates an example of the user action log recorded in the action history DB 32. In Fig. 6, the user using the study 104 in time zones such as September 1 (Friday) 22:00-23:00, September 2 (Saturday) 9:00-13:00, September 3 (Sunday) 20:00-22:30, and the like, and the room temperature at that time being 26°C are recorded as the user action log, for example.

The home console system can recognize that the possibility of using the PC 144 and setting the room temperature to 26°C is high when the user uses the study 104 by analyzing the user action log illustrated in Fig. 6.

As a result, the home console system boots the PC 144, turns on the power of the air conditioner 142, and sets the room temperature to 26°C in response to the user's utterance of "Prepare the study". That is, in this example, the operation target device is the air conditioner 142 and the PC 144, and the operation content is both power on.

The home console system then responds to the user with "Booted the computer. Turned on the heater. 26°C has been set".

Note that, in a case where the user makes an utterance, and in a case where the operation target device does not match a state recognized from the action history information at the time of the utterance, the home console system controls the operation target device to match the state. Therefore, for example, in a case where the room temperature in the study 104 is already 26°C, the home console system does not need to execute control of starting the heating of the air conditioner 142.

### (Second Example)

U: "Prepare the study".
S: "Where is the study?"
U: "The room with the computer".
S: "Booted the computer. Turned on the heater. 26°C has been set".

In a second example of the PC operation, in a case where the home console system has recognized that the intention of the user's utterance is "to use the study", similarly to the above-described first example but cannot recognize which room is the study 104, the home console system makes a response (inquiry) of "Where is the study?", requesting explicit indication (ask-back function), to the user.

In a case where the user has made an utterance of (answered) "The room with the computer" to the inquiry, the home console system can recognize the home appliances present in each room on the basis of power supply information and the like of the home appliances installed in each room of the house 100.

Then, the home console system controls the operation target device installed in the study 104 to match a state that is highly likely to occur in a case where the user is in the study 104 that is the room in which the PC 144 is installed on the basis of a state recognized from the action history of the user's life so far and the like at the stage where the home console system has recognized the presence of the PC 144.

For example, since the home console system has recognized that the user uses the PC 144 and the room temperature is about 26°C when the user is in the study 104 from the action history of the user's life so far (for example, the user action log in Fig. 6), the home console system boots the PC 144, turns on the power of the air conditioner 142, sets the temperature to 26°C, and makes a response to the user that the preparation has been made.

### (Third Example)

U: "Prepare the study".
S: "Where is the study?"
U: "The room with the computer".
S: "Sorry. Couldn't find it".

In a third example of the PC operation, in a case where the home console system cannot recognize which room is the study 104, similarly to the above-described second example, the home console system makes an inquiry of "Where is the study?", requesting explicit indication, and obtains an answer of "The room with the computer" from the user.

The home console system recognizes the home appliances present in each room on the basis of the power supply information of the home appliances. Here, since the home console system has not been able to recognize the presence of the PC 144, the home console system makes a response of "Sorry. Couldn't find it" to the user, feeding back the fact.

### (Fourth Example)

U: "Prepare the study".
S: "Where is the study?"
U: "The room with the computer".
S: "Sorry. Couldn't find it".
U: "The next room".
S: "Turned on the heater in the study. 26°C has been set".

In a fourth example of the PC operation, in a case where the home console system was not able to recognize which room is the study 104, similarly to the above-described third example, the home console system has made an inquiry of "Where is the study?", requesting explicit indication, and has obtained the answer of "The room with the computer". However, the home console system cannot specify the room anyway, and makes a response (feedback) of "Sorry. Couldn't find it".

After the feedback, the home console system determines whether or not the interaction sequence continues. At this time, in a case where the user continuously makes an utterance of "The next room" to the feedback, the home console system specifies the study 104 as the next room to the bedroom 105 on the basis of the content of the utterance continuously made by the user, the information obtained from the interaction sequence so far, and the like. Then, the home console system causes the operation target device installed in the study 104 to match the environmental state of the case where the user is in the study 104.

For example, since the home console system has recognized that the room temperature is about 26°C when the user is in the study 104 from the action history of the user's life so far (for example, the user action log in Fig. 6), the home console system turns on the power of the air conditioner 142, sets the temperature to 26°C, and makes a response to the user that the preparation has been made.

### (Fifth Example)

U: "Prepare the study".
S: "Where is the study?"
U: "The room with the computer".
S: "Sorry. Couldn't find it".

### <<Passage of fixed time>>

U: "Turn on the light".
S: "Understood".

In a fifth example of the PC operation, in a case where the home console system was not able to recognize which room is the study 104, similarly to the above-described third example, the home console system has made an inquiry of "Where is the study?", requesting explicit indication, and has obtained the answer of "The room with the computer". However, the home console system cannot specify the room anyway, and makes a response (feedback) of "Sorry. Couldn't find it".

After the feedback, the home console system determines whether or not the interaction sequence continues. Thereafter, in a case where the user has made an utterance of "Turn on the light" after passage of a fixed period, the home console system executes processing, recognizing that the utterance is a user's new utterance, as a result of the passage of the fixed period.

In other words, the home console system makes a response of "Understood" in response to the user's new utterance of "Turn on the light", and recognizes that the intention of the user's utterance is "to light an illumination". Then, the home console system executes processing of lighting an illumination in the bedroom 105 where the user is present. However, the light 151 and the lamp 154 are present in the bedroom 105 and can be the targets to be lighted.

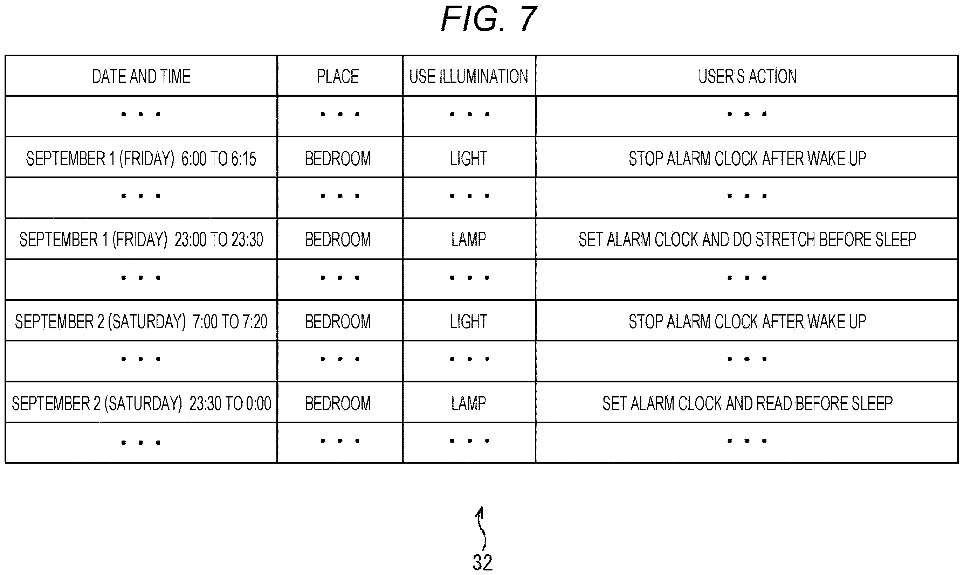

Fig. 7 illustrates an example of the user action log recorded in the action history DB 32. In Fig. 7, in the bedroom 105, for example, the light 151 is used in morning time zones such as September 1 (Friday) 6:00-6:15 and September 2 (Saturday) 7:00-7:20, and the lamp 154 is used in night time zones such as September 1 (Friday) 23:00-23:30 and September 2 (Saturday) 23:30-0:00.

Therefore, the home console system recognizes that it is more appropriate to turn on the light 151 rather than the lamp 154 from the fact that the current time of around 7:00 in the morning and the illumination use rate in the morning, and turns on the light 151.

However, the aforementioned does not apply in a case where the probability of turning on the lamp 154 in the morning is high as the daily action history of the user stored in the action history DB 32, and the lamp 154 may be selected from the light 151 and the lamp 154 and turned on.

### (C) Example of outlet operation (place: study or bedroom)

Next, an example of an interaction sequence between the user and the home console system in a case where the user cleans the study 104 and the bedroom 105 on the second floor using a vacuum cleaner, and a power cord does not reach the bedroom 105 when the user moves from the study 104 to the bedroom 105 while cleaning the floor after cleaning the study 104 will be described.

However, in this case, it is assumed that the power plug of the vacuum cleaner is inserted in the outlet 143 of the study 104.

### (First Example)

U: "Unplug the outlet".
S: "Unplugged the power plug of the vacuum cleaner".

In a first example of the outlet operation, the home console system recognizes the intention of the user's utterance of "Unplug the outlet" is to "unplug the power plug". Furthermore, the home console system can recognize where the user is currently present and what the user uses on the basis of the sensor information obtained from the various sensors and power consumptions of the home appliances.

Here, as the sensor information, the sensor information from the sensor 145 installed in the study 104 and the sensor 155 installed in the bedroom 105 is used, for example, and as the power consumption, the power consumption of the home appliances connected to the outlet 143 provided on the wall surface of the study 104 and the outlet 153 provided on the wall surface of the bedroom 105 is used, for example.

As a result, the home console system recognizes that the home appliance currently used by the user is the vacuum cleaner. Then, at the point of time when confirming that the vacuum cleaner is not used by the user, the home console system unplugs the power plug of the vacuum cleaner from the outlet 143 so as to stop supply of the power from a power supply source to the vacuum cleaner.

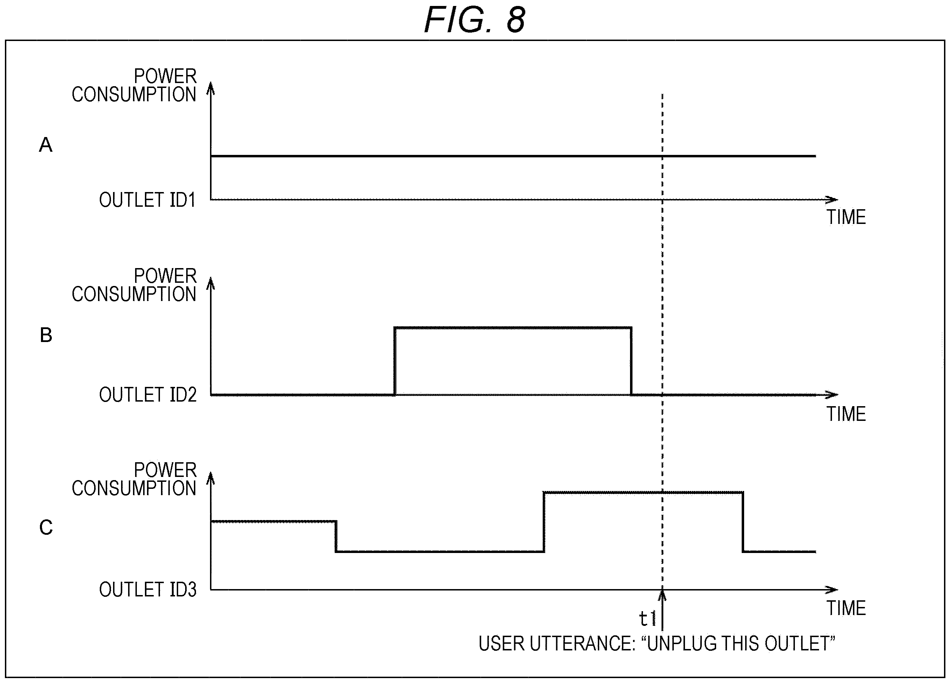

Here, in a case where a plurality of power plugs of the home appliances is inserted in the sockets of the outlet 143, a target socket can be specified by analyzing the power consumption for each socket of the outlet 143, as illustrated in Fig. 8, for example.

Fig. 8 illustrates a first example of the power consumption for each socket of the outlet 143. Note that, in the graphs from A in Fig. 8 to C in Fig. 8, the vertical axis represents the power consumption (W) and the horizontal axis represents the time.

For example, the outlet 143 is provided with three sockets arranged in the vertical direction. The power consumption of the first socket (hereinafter written as first outlet) identified with an outlet ID1 is illustrated in A in Fig. 8.

Furthermore, the power consumption of the second socket (hereinafter written as second outlet) identified with an outlet ID2 is illustrated in B in Fig. 8 and the power consumption of the third socket (hereinafter written as third outlet) identified with an outlet ID3 is illustrated in C in Fig. 8.

In a case where the user has uttered "Unplug the outlet" at time t1, the home console system acquires power information regarding transition of past power consumption from the time of the user's utterance, and selects a socket not currently used and has been used for a fixed time from among the sockets of the outlet 143.

Specifically, the first outlet (A in Fig. 8) has constant power consumption on a constant basis and is a socket of the home appliance being currently used, and is thus excluded from the selection targets. Furthermore, the third outlet (C in Fig. 8) has power consumption that varies for each time zone but is a socket of the home appliance being currently used, and is thus excluded from the selection targets.

Meanwhile, the second outlet (B in Fig. 8) is a socket of the home appliance that is not used at the current point of time when the power consumption has rapidly decreased and is a socket of the home appliance that has been used for a fixed time, at time t1 before the user's utterance, and is thus (the socket of) the outlet to be selected. In other words, the second outlet of the first to third outlets can be said to be the outlet (socket) with the highest selection probability.

By using the correlation of the power consumptions for the selection of (the socket of) the outlet in this way, the second outlet identified with the outlet ID2 is selected, the power plug inserted in the second outlet is unplugged. Thereby, the supply of the power to the vacuum cleaner is stopped, and the home console system makes a response to the user that the power plug has been unplugged.

Note that, as a method of unplugging the power plug of the vacuum cleaner from the outlet 143 provided in the study 104, the power plug inserted in the outlet can be automatically unplugged by providing a dedicated removal mechanism in the outlet 143, for example.

More specifically, a mechanism using an elastic body such as a coil spring or an air spring is incorporated in the outlet 143, for example, and the mechanism pushes out the power plug inserted in the outlet by rotational moment of a cylinder to which compressed air is sent or the spring, thereby unplugging the power plug from the outlet 143. Furthermore, for example, a mechanism using a gear locked by a lock may be incorporated in the outlet 143. The mechanism applies spring force to a plate when the gear is unlocked, and pushes the plate to a front surface, thereby pushing out the power plug inserted in the socket.

### (Second Example)

U: "Unplug the outlet".
S: "There are two candidates of the first outlet and the second outlet".
U: "The one in the center".
S: "Unplugged the second outlet".

In a second example of the outlet operation, in a case where the home console system has recognized that the intention of the user's utterance is "to unplug an outlet", similarly to the above-described first example but there is a plurality of (sockets of) outlets to be selected, the home console system makes a response of "There are two candidates of the first outlet and the second outlet" to the user (ask-back function).

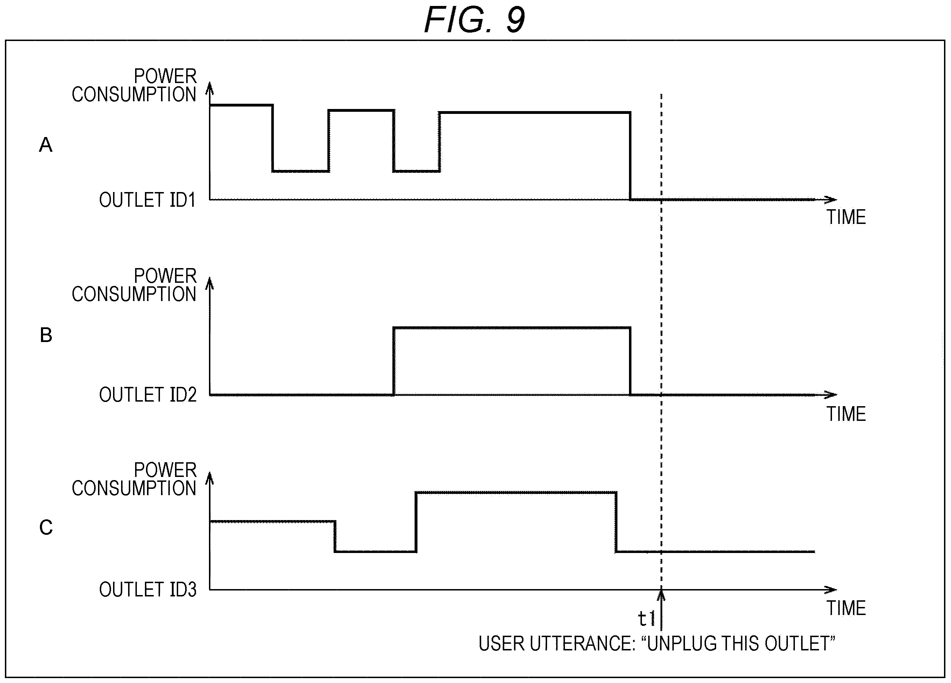

Fig. 9 illustrates a second example of the power consumption for each socket of the outlet 143. Note that Fig. 9 illustrates changes in the power consumption of the first outlet, second outlet, and third outlet in chronological order, similarly to Fig. 8.

In a case where the user has uttered "Unplug the outlet" at time t1, the home console system acquires the power information and selects a socket not currently used and has been used for a fixed time from among the sockets of the outlet 143. However, a plurality of sockets to be selected is present.

Specifically, the first outlet (A in Fig. 9) and the second outlet (B in Fig. 9) are sockets of home appliances currently not used although the power consumption changes in each time zone and having been used for a fixed period, and are thus both (the sockets of) the outlets to be selected.

Note that the third outlet (C in Fig. 9) has power consumption that varies for each time zone but is a socket of the home appliance being currently used, and is thus excluded from the selection targets. In other words, the first outlet and the second outlet of the first to third outlets can be said to be the outlets (sockets) with the highest selection probability.

As described above, the selection targets can be narrowed down to the first outlet and the second outlet by using the correlation of the power consumption when selecting (the sockets) of the outlets. However, there are some cases where the selection target candidates cannot be further narrowed down. In that case, the home console system makes a response of "There are two candidates of the first outlet and the second outlet" (ask-back function).

In a case where the user has made an utterance of (answered) "The one in the center" in response to the response, the home console system can recognize to unplug the power plug inserted in the second outlet of the first outlet and the second outlet to be selected. In other words, the second outlet of the first to third outlets can be said to be the outlets (sockets) with the highest selection probability according to the selection probability updated according to the user's utterance (answer).

Then, the home console system unplugs the power plug (the power plug of the vacuum cleaner) inserted in the second outlet identified with the outlet ID2, and makes a response to the user that the power plug has been unplugged.

### (D) Example of heater operation (time: around 23:00 on holidays, place: living room)

Next, an example of an interaction sequence between the user and the home console system in a case where the operation of a heater (air conditioner) is performed in the living room 101 at around 23:00 at holiday night according to the user's utterance will be described.

### (First Example)

U: "Is the heater on?"
S: "The bedroom is not heated".
U: "Turn it on".
S: "Turned on the heater. 26°C has been set".

In a first example of the heater operation, the home console system recognizes that the intention of the user's utterance of "Is the heater on?" is to "confirm the power supply of the heater".

Furthermore, the home console system recognizes that three heaters that operate as heating are present in the house 100 and recognizes that the bedroom 105 has the highest user presence probability at 23:00 at night from the action history of the user's life so far (for example, the user action log in Fig. 7).

Therefore, the home console system recognizes that the intention of the user's utterance refers to the heater 152 in the bedroom 105, and makes a response of "The bedroom is not heated" as a current heating state of the bedroom 105.

In a case where the user has uttered "Turn it on" in response to the response, the home console system recognizes that the intention of the user's utterance refers to the heater 152 in the bedroom 105, and turns on the power of the heater 152 installed in the bedroom 105 and sets the temperature to 26°C. The home console system then responds to the user with "Turned on the heater. 26°C has been set".

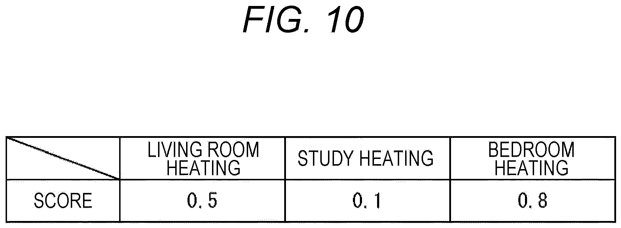

Fig. 10 illustrates a first example of selection scores of operation candidate devices at the time of operating a heater.

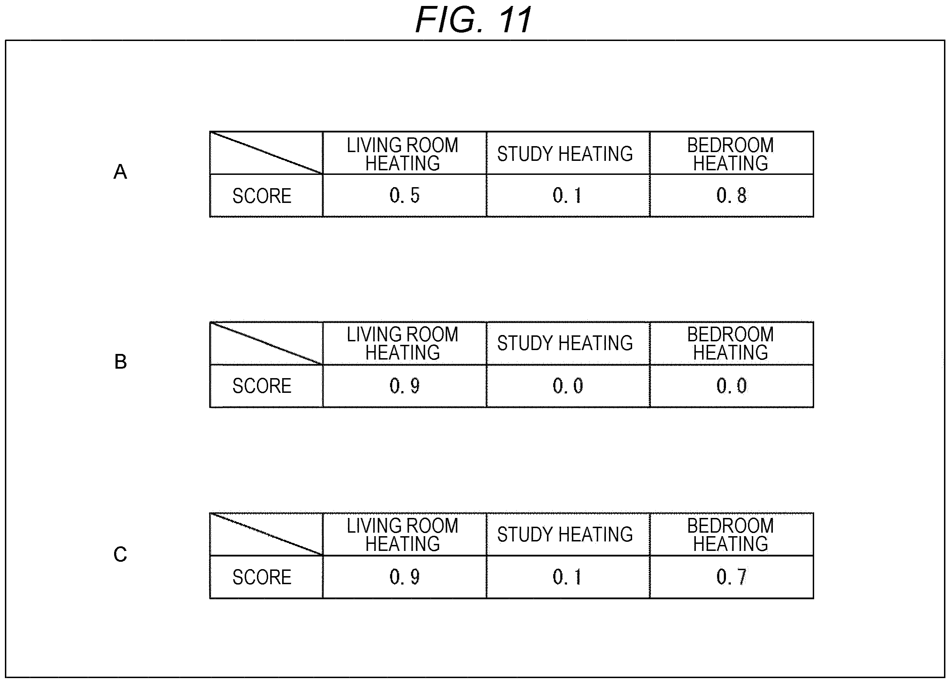

Fig. 10 illustrates, as the operation candidate devices, the air conditioner 112 (living room heating) installed in the living room 101, the air conditioner 142 (study heating) installed in the study 104, and the heater 152 (bedroom heating) installed in the bedroom 105. Note that the above relationship is similarly applied to Figs. 11 to 13 to be described below.

Fig. 10 illustrates an example of the selection scores of when the user has uttered "Is the heater on?" (or "Turn it on") at around 23:00, and 0.5, 0.1, and 0.8 are calculated as the selection scores for the air conditioner 112, the air conditioner 142, and the heater 152, respectively.

In this case, since the heater 152 having the score of 0.8 calculated is the operation candidate device with the highest score, the home console system selects the heater 152 installed in the bedroom 105 as the operation target device and performs control to turn on the power and set the temperature to 26°C as the operation content.

### (Second Example)

U: "Is the heater on?"
S: "The bedroom is not heated".
U: "The place where I am".
S: "The heater in the living room is on".
U: "Turn it off".
S: "Turned off the heater in the living room".

In a second example of the heater operation, the home console system recognizes that the intention of the user's utterance refers to the heater 152 in the bedroom 105, similarly to the above-described first example, and makes a response of "The bedroom is not heated" to the user as a current heating state of the bedroom 105.

In a case where the user has uttered "The place where I am" in response to the response, the home console system recognizes that the intention of the user's utterance refers to the air conditioner 112 that is the heater in the living room 101, instead of the bedroom 105, from the interaction sequence so far. Then, the home console system recognizes that the power of the air conditioner 112 is on on the basis of the power supply information of the air conditioner 112 in the living room 101, and makes a response of "The heater in the living room is on" to the user (ask-back function).

Furthermore, in a case where the user has uttered "Turn it off" in response to the response, the home console system recognizes that the intention of the user's utterance refers to the air conditioner 112 installed in the living room 101, from the interaction sequence so far, and turns off the power of the air conditioner 112. Then, the home console system responds to the user with "Turned off the heater in the living room".

Fig. 11 illustrates a second example of selection scores of operation candidate devices at the time of operating a heater.

A in Fig. 11 illustrates an example of the selection scores of when the user's utterance of "Is the heater on?" has been performed. In A in Fig. 11, 0.5, 0.1, and 0.8 are calculated as the selection scores for the air conditioner 112, the air conditioner 142, and the heater 152, respectively. In this case, the home console system selects the heater 152 having the highest score as the operation candidate device, and makes a response to the user.

Furthermore, B in Fig. 11 illustrates an example of the selection scores of when the user's utterance of "The place where I am" has been performed. In B in Fig. 11, 0.9, 0.0, and 0.0 are calculated as the updated selection scores, respectively. In this case, the home console system selects the air conditioner 112 having the highest score as the operation candidate device, and makes a response to the user.

Furthermore, C in Fig. 11 illustrates an example of the selection scores of when the user's utterance of "Turn it off" has been performed. In C in Fig. 11, 0.9, 0.1, and 0.7 are calculated as the updated selection scores, respectively. In this case, the home console system selects the air conditioner 112 with the highest score as the operation target device, and performs control to turn off the power.

As described above, the response to the first user's utterance is different from the user's intention, but the responses to the second and third user's utterances are modified to match the user's intention according to the interaction with the user. Furthermore, along with the modification, the selection score (probability) of each operation candidate device is also updated, and the operation target device is selected from among the operation candidate devices on the basis of the updated selection score.

### (Third Example)

U: "Is the heater on?"
S: "Which of the living room or bedroom?"
U: "The place where I am".
S: "The heater in the living room is on".
U: "Turn it off".
S: "Turned off the heater in the living room".

In a third example of the heater operation, the home console system cannot recognize which heater the intention of the user's utterance of "Is the heater on?" refers to, and thus makes a response of "Which of the living room or bedroom?" (ask-back function).

In a case where the user has uttered "The place where I am" in response to the response, the home console system recognizes that the intention of the user's utterance refers to the air conditioner 112 that is the heater in the living room 101, instead of the bedroom 105, similarly to the above-described second example, and makes a response of "The heater in the living room is on" (ask-back function).

Furthermore, in a case where the user makes an utterance of "Turn it off" in response to this response, the home console system turns off the power of the air conditioner 112, similarly to the above-described second example and the like, and makes a response about turning off of the power.

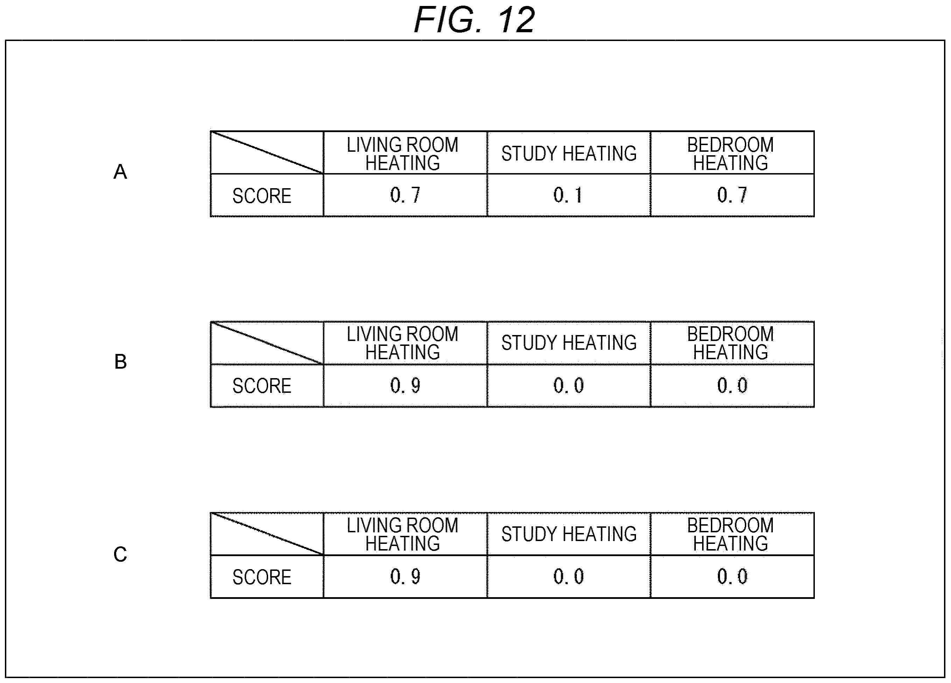

Fig. 12 illustrates a third example of selection scores of operation candidate devices at the time of operating a heater.

A in Fig. 12 illustrates an example of the selection scores of when the user's utterance of "Is the heater on?" has been performed. In A in Fig. 12, 0.7, 0.1, and 0.7 are calculated as the selection scores for the air conditioner 112, the air conditioner 142, and the heater 152, respectively. In this case, since two home appliances of the air conditioner 112 and the heater 152 are present as heaters having the highest score, the home console system selects these heaters as the operation candidate devices, and makes a response to the user.

Furthermore, B in Fig. 12 illustrates an example of the selection scores of when the user's utterance of "The place where I am" has been performed. In B in Fig. 12, 0.9, 0.0, and 0.0 are calculated as the updated selection scores, respectively. In this case, the home console system selects the air conditioner 112 having the highest score as the operation candidate device, and makes a response to the user.

Furthermore, C in Fig. 12 illustrates an example of the selection scores of when the user's utterance of "Turn it off" has been performed. In C in Fig. 12, 0.9, 0.0, and 0.0 are calculated as the updated selection scores, respectively. In this case, the home console system selects the air conditioner 112 with the highest score as the operation target device, and performs control to turn off the power.

As described above, in a case where a plurality of heaters with the highest selection score (probability) is present in the response to the first user's utterance, the responses to the second and third user's utterances match the user's intention by seeking an instruction from the user. Furthermore, along with the change, the selection score (probability) of each operation candidate device is also updated, and the operation target device is selected from among the operation candidate devices on the basis of the updated selection score.

### (Fourth Example)

U: "Is the heater in the living room on?"
S: "The heater in the living room is on".
U: "Turn it off".
S: "Turned off the heater in the living room".

In a fourth example of the heater operation, the home console system recognizes that the intention of the user's utterance refers to the air conditioner 112 in the living room 101 from the user's utterance of "Is the heater in the living room on?", and makes a response of "The heater in the living room is on". Furthermore, in a case where the user makes an utterance of "Turn it off" in response to this response, the home console system turns off the power of the air conditioner 112, similarly to the above-described second example and the like, and makes a response about turning off of the power.

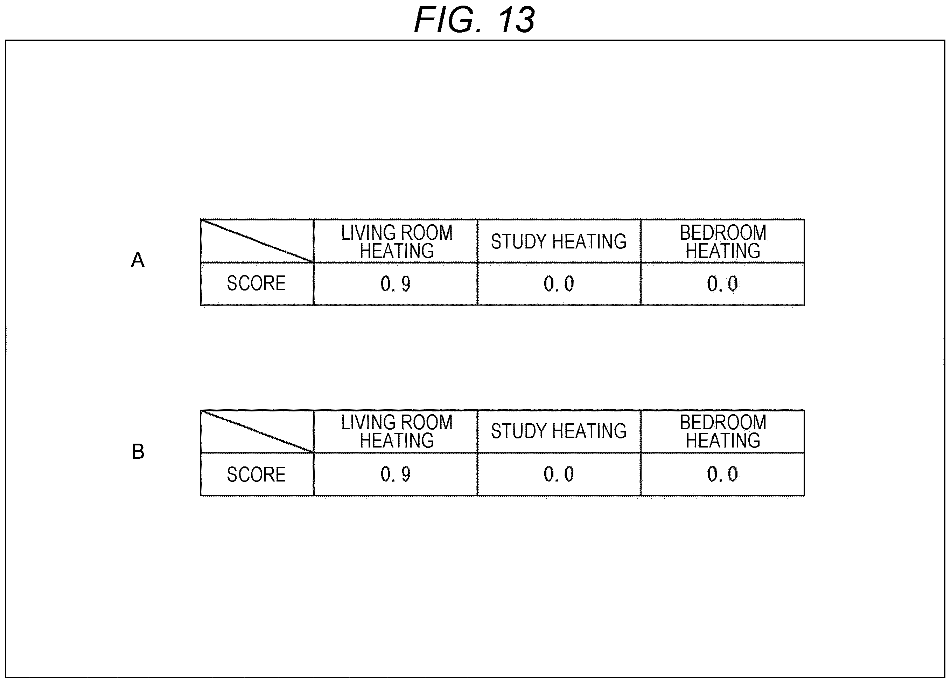

Fig. 13 illustrates a fourth example of selection scores of operation candidate devices at the time of operating a heater.

A in Fig. 13 illustrates an example of the selection scores of when the user's utterance of "Is the heater in the living room on?" has been performed. In A in Fig. 13, 0.9, 0.0, and 0.0 are calculated as the selection scores for the air conditioner 112, the air conditioner 142, and the heater 152, respectively. In this case, the home console system selects the air conditioner 112 having the highest score as the operation candidate device, and makes a response to the user.

Furthermore, B in Fig. 13 illustrates an example of the selection scores of when the user's utterance of "Turn it off" has been performed. In B in Fig. 13, 0.9, 0.0, and 0.0 are calculated as the updated selection scores, respectively. In this case, the home console system selects the air conditioner 112 with the highest score as the operation target device, and performs control to turn off the power.

As described above, even in a case where there is a difference among values of the scores (probabilities) to the operation candidate devices in the response to the first user's utterance, a device matching the user's intention is controlled in the response to the second user's utterance by following an explicit indication in a case where the user has explicitly indicated the operation target device.

### (Fifth Example)

U: "Heat the sleeping room".
S: "Turning on the heater in the xxxx's bedroom".
U: "I'll go to bed at about 12:00".
S: "Understood".

In a fifth example of the heater operation, the home console system recognizes that the intention of the user's utterance of "Heat the sleeping room" is to "turn on the power of a heater". Furthermore, the home console system recognizes in which room the user sleeps from the sensor information, the user action log recorded in the action history DB 32, and the like, and executes activation of the heater 152 such that the temperature in the bedroom 105 becomes an appropriate temperature in time with a user's sleep time zone.

Here, in a case where the sleep time is specified by the user, the home console system controls the operation of the heater 152 in time with the time. Note that, even in a case where the sleep time is not specified by the user, the home console system can estimate the sleep time of the user on the basis of the sensor information, the user action log, and the like and control the operation of the heater 152.

### (E) Example of game console operation (time: around 16:00 on weekdays, place: living room)

Next, an example of an interaction sequence between the user and the home console system in a case where the operation of the game machine 116 is performed in the living room 101 at around 16:00 on weekdays according to the user's utterance will be described.

### (First Example)

U: "Turn it on".
S: "What would like to turn on?"
U: "Game"
S: (Executed game machine activation processing)

In a first example of the game machine operation, the home console system recognizes that the intention of the user's utterance of "Turn it on" is to "turn on a home appliance". Furthermore, the home console system recognizes that a plurality of home appliances that can be powered on is present in the living room 101 where the user is currently present.

At this time, the home console system refers to use probabilities adapted to the user with respect to the home appliances such as the air conditioner 112, the television 114, the recorder 115, and the game machine 116 installed in the living room 101. In a case where there is no difference among the use probabilities of the home appliances, the home console system cannot recognize which home appliance the user refers to, and thus makes a response of "What would you like to turn on?" to the user.

That is, this response is an inquiry for the user to explicitly indicate a desired operation target device (ask-back function). Then, in a case where the user has uttered "Game" in response to the response, the home console system recognizes that the intention of the user's utterance refers to the game machine 116. Thereby, the home console system executes processing of activating the game machine 116 to turn on the power of the game machine 116.

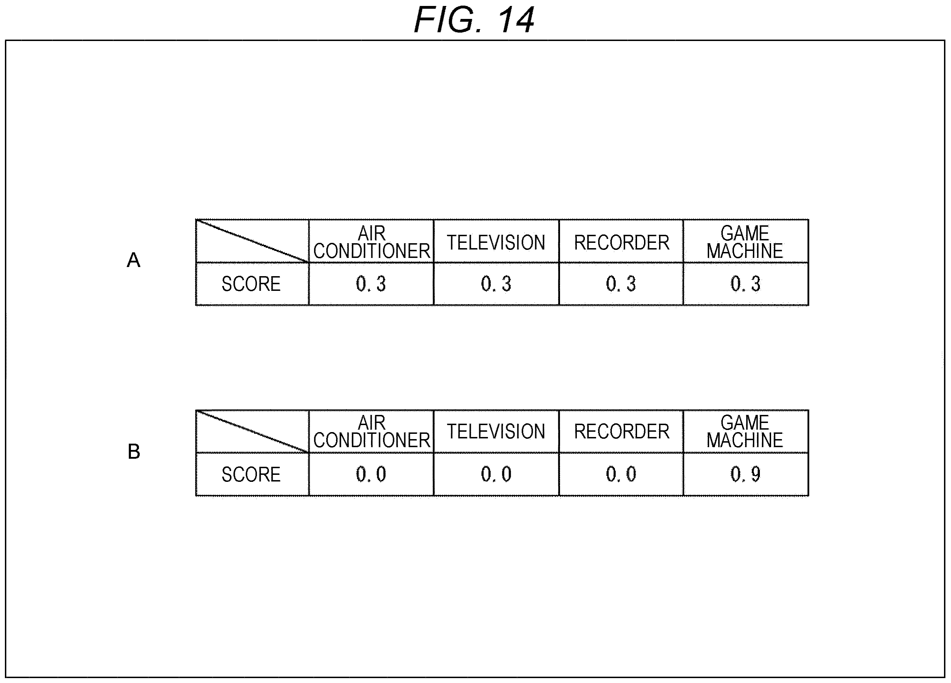

Fig. 14 illustrates a first example of selection scores of operation candidate devices at the time of operating a power supply.

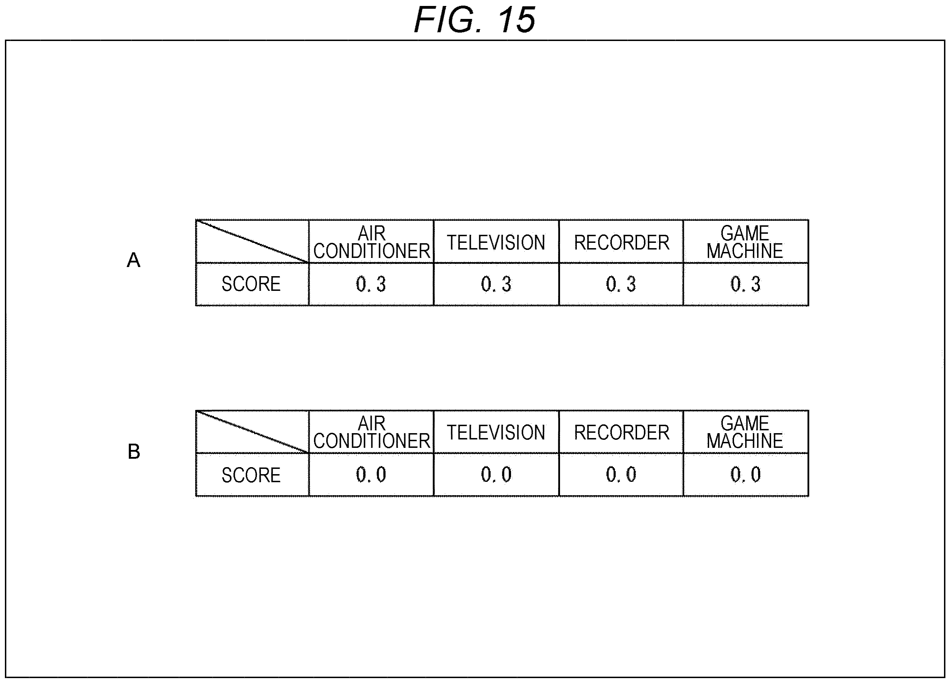

Fig. 14 illustrates, as the operation candidate devices, the air conditioner 112, the television 114, the recorder 115, and the game machine 116 installed in the living room 101. Note that the above relationship is similarly applied to Fig. 15 to be described below.

A in Fig. 14 illustrates an example of the selection scores of when the user's utterance of "Turn it on" has been performed. In A in Fig. 14, 0.3, 0.3, 0.3, and 0.3 are calculated as the selection scores for the air conditioner 112, the television 114, the recorder 115, and the game machine 116, respectively. In this case, the home console system makes an inquiry to the user because there is no difference in the scores of the operation candidate devices and the home console system cannot uniquely specify the operation target device.

B in Fig. 14 illustrates an example of the selection scores of when the user's utterance of "Game" has been performed. In B in Fig. 14, 0.0, 0.0, 0.0, and 0.9 are calculated as the updated selection scores, respectively. The home console system selects the game machine 116 with the highest score as the operation target device, and performs control to turn on the power.

As described above, even in a case where a plurality of home appliances that can be targets is present in the response to the first user's utterance, a device matching the user's intention is controlled in the response to the second user's utterance by making an inquiry for the user to explicitly indicate the operation target device.

### (Second Example)

U: "Turn it on".
S: "What would like to turn on?"
U: "Refrigerator"
S: "Sorry. Couldn't turn on the refrigerator".

In a second example, the home console system cannot recognize which home appliance the intention of the user's utterance refers to, similarly to the above-described first example, and thus makes a response of "What would you like to turn on?".

In a case where the user has uttered "Refrigerator" in response to the response, the home console system recognizes that the intention of the user's utterance refers to the refrigerator 133 installed in the kitchen 103 but cannot select the refrigerator 133 as the operation target device, and thus makes a response of "Sorry. Couldn't turn on the refrigerator". Note that, here, in a case where the power of the refrigerator 133 is already on, the home console system may make a response of "The refrigerator is currently on", for example.

Fig. 15 illustrates a second example of selection scores of operation candidate devices at the time of operating a power supply.

A in Fig. 15 illustrates an example of the selection scores of when the user's utterance of "Turn it on" has been performed. In A in Fig. 15, 0.3, 0.3, 0.3, and 0.3 are calculated as the selection scores of the air conditioner 112, the television 114, the recorder 115, and the game machine 116, respectively. In this case, the home console system makes an inquiry to the user because there is no difference in the scores of the operation candidate devices.

B in Fig. 15 illustrates an example of the selection scores of when the user's utterance of "Refrigerator" has been performed. In B in Fig. 15, 0.0, 0.0, 0.0, and 0.0 are calculated as the updated selection scores, respectively. Since the home console system cannot select the air conditioner 112 as the operation target device because the air conditioner 112 is not included in the operation candidate device, and thus makes a response to the user that the air conditioner 112 cannot be selected (notification that the processing has failed).

As described above, in a case where a plurality of home appliances that can be targets is present in the response to the first user's utterance, and when an inquiry has been made to the user to explicitly indicate the operation target device but the user has given an instruction on a device that cannot be the operation target device, the home console system may feedback that the processing according to the user's utterance of "Turn it on" has failed in the response to the second user's utterance.

### (F) Example of heater operation from place outside house (time: around 18:00 on weekdays, place: place outside house)

Next, an example of an interaction sequence between the user and the home console system in a case where the operation of a heater (air conditioner) is performed at around 18:00 on weekdays according to the user's utterance when the user comes home from a place outside the house will be described. Note that, at this time, the user's utterance is made from a place outside the house through the mobile terminal device 50 such as a smartphone.

### (First Example)

U: "Heat it".
S: "Turned on the heater in the living room. 26°C has been set".

In a first example of the heater operation when the user is out of the house, the home console system recognizes that the intention of the user's utterance of "Heat it" is to "turn on the power of the heater".

Furthermore, the home console system recognizes that three heaters that operate as heating are present in the house 100 and recognizes that the living room 101 has the highest probability of being used by the user who has come home from the action history of the user's life so far (for example, the user action log in Fig. 4).

Therefore, the home console system recognizes that the intention of the user's utterance of "Heat it" refers to the living room 101, and turns on the power of the air conditioner 112 installed in the living room 101 and sets the temperature to 26°C. The home console system then responds to the user with "Turned on the heater in the living room. 26°C has been set".

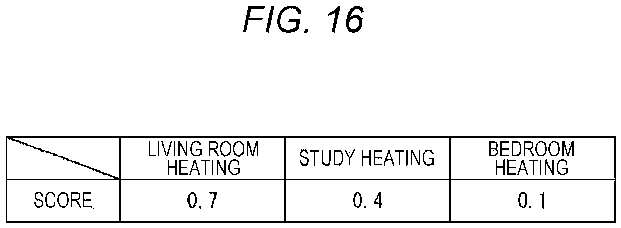

Fig. 16 illustrates a first example of selection scores of operation candidate devices at the time of operating a heater from a place outside the house.

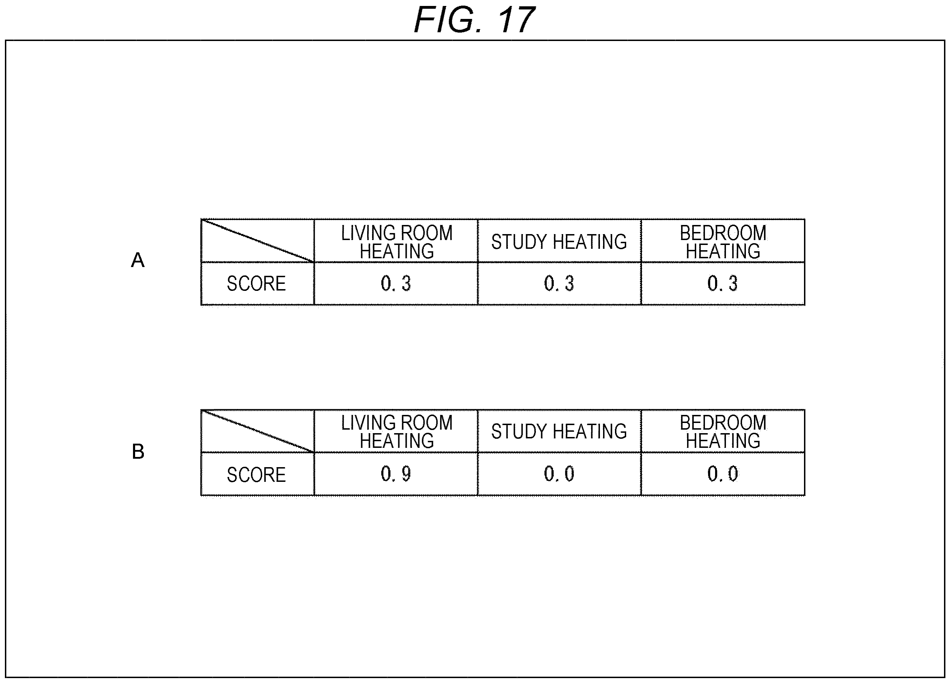

Fig. 16 illustrates, as the operation candidate devices, the air conditioner 112 (living room heating) installed in the living room 101, the air conditioner 142 (study heating) installed in the study 104, and the heater 152 (bedroom heating) installed in the bedroom 105. Note that the above relationship is similarly applied to Fig. 17 to be described below.

Fig. 16 illustrates an example of the selection scores of when the user has uttered "Heat it" at around 18:00, and 0.7, 0.4, and 0.1 are calculated as the selection scores for the air conditioner 112, the air conditioner 142, and the heater 152, respectively.

In this case, the home console system selects the air conditioner 112 with the highest score as the operation target device, and performs control to turn on the power and set the temperature to 26°C as the operation content.

### (Second Example)

U: "Heat it".
S: "Which room would you like to heat?"
U: "Living room, please".
S: "Turned on the heater in the living room. 26°C has been set".

In the second example of the heater operation when the user is out of the house, the home console system recognizes that the intention of the user's utterance is to "turn on the power of the heater", similarly to the above-described first example. Furthermore, the home console system recognizes that three heaters are present in the house 100.

The home console system refers to use probabilities adapted to the user with respect to the air conditioner 112 installed in the living room 101, the air conditioner 142 installed in the study 104, and the heater 152 installed in the bedroom 105. In a case where there is no difference in the use probabilities among the heaters, the home console system cannot recognize which heater the user refers to, and thus makes a response of "Which room would you like to heat?" (ask-back function).

In a case where the user has uttered "Living room, please" in response to the response, the home console system recognizes that the intention of the user's utterance refers to the air conditioner 112 installed in the living room 101. As a result, the home console system turns on the power of the air conditioner 112 and sets the temperature to 26°C.

Fig. 17 illustrates a second example of selection scores of operation candidate devices at the time of operating a heater from a place outside the house.

A in Fig. 17 illustrates an example of the selection scores of when the user has uttered "Heat it", and 0.3, 0.3, and 0.3 are calculated as the selection scores for the air conditioner 112, the air conditioner 142, and the heater 152, respectively. In this case, the home console system makes an inquiry to the user because there is no difference in the scores of the operation candidate devices.

B in Fig. 17 illustrates an example of the selection scores of when the user has uttered "Living room, please", and 0.9, 0.0, and 0.0 are calculated as the updated selection scores, respectively. In this case, the home console system selects the air conditioner 112 with the highest score as the operation target device, and performs control to turn on the power as the operation content.

As described above, even in a case where a plurality of heaters that can be targets is present in the response to the first user's utterance, a heater matching the user's intention is controlled in the response to the second user's utterance by making an inquiry for the user to explicitly indicate the operation target device.

### (G) Example of dinner preparation operation from place outside house (time: around 18:00 on weekdays, place: place outside house)

Next, an example of an interaction sequence between the user and the home console system in a case where the user thinks of a dinner to be cooked at home after going home at around 18:00 on weekdays will be described. Note that, here, the user's utterance is made from a place outside the house through the mobile terminal device 50 such as a smartphone.

### (First Example)

U: "I want to make Takoyaki".
S: (Acquired "Takoyaki recipe" from a website)
S: (Obtained information of ingredients used in the user's normal cooking)
S: "xxxx is missing".

In a first example of dinner preparation when the user is out of the house, the home console system recognizes that the intention of the user's utterance is to "make Takoyaki for dinner" from the user's utterance of "I want to make Takoyaki", and acquires recipe information that is "Takoyaki recipe" published on a website on the Internet. From this recipe information, it is recognized that, for example, flour, boiled octopus, powdered green laver, red pickled ginger, and tempura scraps are required as ingredients for takoyaki.

Furthermore, the home console system acquires information of ingredient (ingredient history information) used in user's normal cooking on the basis of the sensor information from the sensor installed in the refrigerator 133, a purchase log (user action log) of shopping by the user, and the like As the ingredient history information, for example, information regarding ingredient used for each meal in a certain period, as described below, can be obtained.

### (Ingredient history information)

September 1: Lunch: No data
: Dinner: Minced meat, cabbage, and bean sprouts
September 2: Lunch: Boiled octopus and red pickled ginger
: Dinner: Brevoort, radish, and spinach
September 3: Lunch: Chicken, tomatoes, and cheese
: Dinner: No data

The home console system estimates that the user has cooked something like "Takoyaki" for lunch on September 2 on the basis of the recipe information and the ingredient history information. Furthermore, the home console system estimates necessary ingredients from the frequencies of the used ingredient on the basis of the ingredient history information and the like.

### Keyword: Takoyaki

Recipe information (takoyaki recipe): flour, boiled octopus, powdered green laver, red pickled ginger, and tempura scraps
Ingredient history information (user-used ingredients): boiled octopus and red pickled ginger

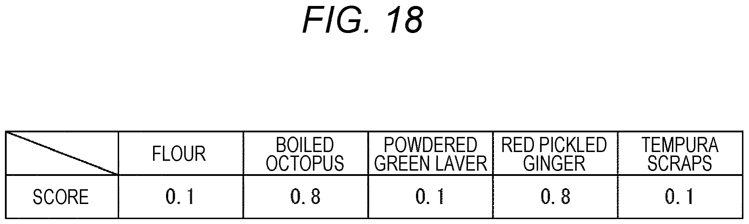

Fig. 18 illustrates an example of tendency scores of cooking ingredients of a user. In Fig. 18, 0.1, 0.8, 0.1, 0.8, and 0.1 are calculated as tendency scores for flour, boiled octopus, powdered green laver, red pickled ginger, and tempura scraps included in a recipe for takoyaki.

In this case, since the boiled octopus and the red pickled ginger with the score of 0.8 calculated have the highest stores, and the other flour, powdered green laver, and tempura scraps have low scores, the home console system is only required to preferentially feedback ingredients having a high possibility of being insufficient at home to the user according to these scores.

### (Second Example)

U: "I want to make Takoyaki".
S: (Acquired "Takoyaki recipe" from a website)
S: (Obtained information of ingredients used in the user's normal cooking)
S: (Acquired NG ingredient information)
S: "xxxx is missing".

In a second example of dinner preparation when the user is out of the house, the home console system recognizes that the intention of the user's utterance is to "make Takoyaki for dinner" from the user's utterance, similarly to the above-described first example, and estimates necessary ingredients on the basis of the recipe information and ingredient history information.

Here, in a case of estimating that the boiled octopus and the red pickled ginger are the ingredients having a high possibility of being insufficient, for example, the home console system can recommend necessary ingredients in consideration of the family's preferences. As information indicating the family's preferences, for example, NG ingredient information in which an ingredient that a certain family member dislikes, as described below, is registered for each user, can be used.

### (NG ingredient information)

User A: Celery
User B: Red pickled ginger and shiitake mushroom
User C: None

The home console system refers to the NG ingredient information and recognizes that the red pickled ginger is NG ingredient for the user B between the boiled octopus and the red pickled ginger, and thus can make a response of "Boiled octopus is insufficient" to the user.

### (Third Example)

U: "Can I eat something at home?"
S: "Pork, cabbage, and peppers are in the refrigerator".
S: "It seems you can fry vegetables".

In a third example of dinner preparation when the user is out of the house, the home console system recognizes that the intention of the user's utterance is "confirmation of dinner recipe" from the user's utterance, and estimates a cookable recipe on the basis of the recipe information, the ingredient history information, and the like, and feeds back the cookable recipe to the user. Note that, in a case where there are too many target ingredients when listing the ingredients in the refrigerator 133, the home console system is only required to pick up and provide notification of target ingredients on the basis of cookable cooking searched from the recipe information.

### (H) Example of message notification at place outside house (time: around 16:00 on holidays, place: place outside house)

Next, an example of an interaction sequence in a case where the mobile terminal device 50 possessed by the user who keeps a pet is notified of a message regarding a pet at a place outside the house at around 16:00 on holidays will be described.

### (First Example)

S: "The cat food is gone. May be better to come home".

In a first example of message notification when the user is out of the house, the home console system recognizes that the user is likely to feed the pet cat at around 16:00 on holidays from the action history of the user's life so far.

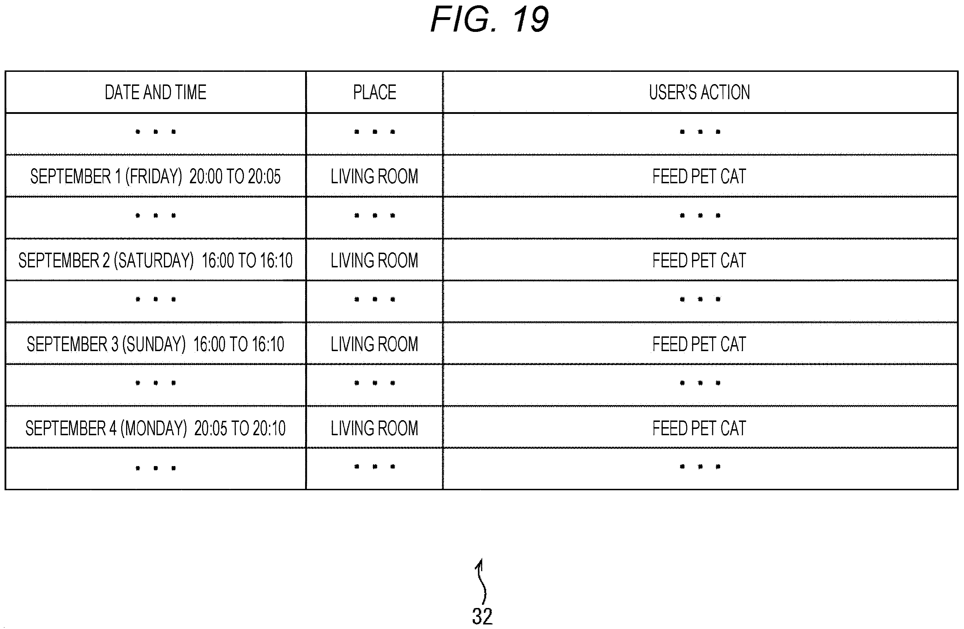

Fig. 19 illustrates an example of the user action log recorded in the action history DB 32. In Fig. 19, for example, the user feeding the pet cat in time zones on weekdays such as September 1 (Friday) 20:00-20:05 and September 4 (Monday) 20:05-20:10, and time zones on holidays such as September 2 (Saturday) 16:00-16:10 and September 3 (Sunday) 16:00-16:10 is recorded as the user action log.

The home console system can recognize that the user is likely to feed the cat at around after 20:00 on weekdays and at around 16:00 on holidays on the basis of the user action log illustrated in Fig. 19.

Furthermore, since the state of the container 118 at a food placing area, the amount of food, a cat's action log, and the like are sensed by sensors such as the sensor 117 in the house 100, the home console system generates a message (feedback information) of which the user who is out of the house is to be notified by analyzing the sensor information obtained from sensing results.

Moreover, the home console system analyzes whether or not the user can return to the house 100 at 16:00 that is the time when the user usually feeds the cat on the basis of the position information (for example, GPS information) obtained from the mobile terminal device 50 possessed by the user who is out of the house.

Then, for example, in a case where the current time is 15:00 and the user can come home in about one hour, the home console system notifies the mobile terminal device 50 possessed by the user of a message of "The cat food is gone. May be better to come home" via the network.

### (Second Example)

S: "The cat food is gone. I contacted the family".

In a second example of the message notification when the user is out of the house, the home console system recognizes that the user is likely to feed the cat at around 16:00 on holidays from the action history (for example, the user action log in Fig. 19) of the user's life so far, but recognizes that the user cannot return to the house 100 at 16:00 that is the time when the user usually feeds the cat as a result of the analysis based on the position information of the user who is out of the house.

In this case, the home console system notifies the mobile terminal device possessed by a family member of the user of a message indicating that the cat's food is gone. However, in a case where a family member of the user is in the house 100, for example, the home console system controls the home appliance (for example, the home console 10) installed in a room where the family member of the user is present and notifies that the cat's food is gone by sound, display, or the like.

Then, the home console system notifies the mobile terminal device 50 possessed by the user of the message of "The cat food is gone. I contacted the family".

### (Third Example)

S: "In xx minutes, you can't make it for usual feeding for the cat, but the cat food seems to be still in".

In a third example of the message notification when the user is out of the house, the home console system recognizes that the user is likely to feed the cat at around 16:00 on holidays from the action history (for example, the user action log in Fig. 19) of the user's life so far, but recognizes that the cat food still remains in the container 118 in the food placing area as a result of the analysis based on the sensor information.

Furthermore, the home console system recognizes that the user can return to the house 100 at 16:00 that is the time when the user usually feeds the cat but there is a little time left as a result of the analysis based on the position information of the user who is out of the house.

In this case, the home console system notifies the mobile terminal device 50 possessed by the user of a message of "In xx minutes, you can't make it for usual feeding for the cat, but the cat food seems to be still in". Note that, in this message, the "xx minutes" refers to the remaining time to departure time to return to the house 100 at 16:00.

Note that, in the first to third examples of the message notification when the user is out of the house, only the responses from the home console system have been described. However, for example, when the user makes an utterance of "Have I fed the cat?" in a case where the user has forgotten whether or not having fed the pet cat, the responses described in the first to third examples may be made.

### (I) Example of bath operation from place outside house (time: around 19:00 on weekdays, place: place outside house)

Next, an example of an interaction sequence between the user and the home console system in a case where the user thinks of taking a bath when returning to the house 100 at around 19:00 on weekdays at a place outside the house. Note that, here, the user's utterance is made from a place outside the house through the mobile terminal device 50 such as a smartphone.

### (First Example)

U: "Make sure the bath is ready".
S: "I'll prepare the bath".

In a first example of the bath operation when the user is out of the house, the home console system recognizes that the intention of the user's utterance of "Make sure the bath is ready" is to "heat the bathtub water". Furthermore, the home console system performs an analysis for estimating a possible time zone of the user coming home on the basis of the position information (GPS information) obtained from the mobile terminal device 50 possessed by the user who is out of the house.

Then, the home console system controls the water heater 163 installed in the bathroom 106 to complete heating of the bathtub water in the time zone estimated to have the user come home. Furthermore, the home console system responds to the user with "I'll prepare the bath".

Note that the home console system can successively calculate and correct bathtub water heating end time on the basis of the information (for example, position information) provided in notification from the mobile terminal device 50. For example, in a case where the user has got something to do although the user was supposed to immediately come home after making an utterance to the system, the home console system can adjust the bathtub water heating end time in accordance with the action of the user at a place out of the house by delaying the bathtub water heating end time or the like.

Furthermore, for example, in a case where the user who is out of the house is near the house 100 and comes home earlier than the bathtub water heating end time, the home console system may notify the mobile terminal device 50 possessed by the user of a proposal message to delay the time when the user comes home in time with the bathtub water heating end time. The proposal message such as "A nearby store offers eggs at a bargain price. Why don't you stop by?" can be provided in notification in a case where eggs is run out as an ingredient in the refrigerator 133 and the nearby store offers eggs at a bargain price.

### (Second Example)

U: "Make sure the bath is ready".
S: "I'll prepare the bath".

### <<Starting another action after coming home>>

S: "Started keeping the bathtub water warm (re-heating the bathtub water)".

In a second example of the bath operation when the user is out of the house, the home console system controls the water heater 163 installed in the bathroom 106 to complete heating of the bathtub water in the time zone estimated to have the user come home according to the user's utterance, similarly to the above-described first example.

However, in the second example, in a case where the user has come home at the scheduled time and the bathtub water has been heated at that time but the user has not taken the bath soon after coming home and has performed another action such as having a meal or cleaning up, the home console system recognizes that the user does not take a bath soon on the basis of the analysis result of the sensor information obtained from sensors such as the sensor 117.

Then, the home console system controls the water heater 163 installed in the bathroom 106 to keep the bathtub water warm or re-heat the bathtub water, for example. Furthermore, the home console system responds to the user with "Started keeping the bathtub water warm (re-heating the bathtub water)".

### (J) Example of bath operation at home (time: around 20:00 on holidays, place: living room)

Next, an example of an interaction sequence between the user and the home console system in a case where the user thinks of taking a bath in the living room 101 at around 20:00 on holidays.

### (First Example)

U: "Is the bath ready?"
S: "The bathtub water has been heated".

In a first example of the bath operation when the user is at home, the home console system recognizes that the intention of the user's utterance of "Is the bath ready?" is to "confirm the state of the bath".

Furthermore, the home console system recognizes whether or not the bath is in an available state such as whether or not another family member is taking the bath by analyzing the sensor information obtained from the sensor 162 installed in the bathroom 106.

Then, the home console system inquires of the water heater 163 whether or not the bathtub water has been heated in a case where the bath is not in the available state. In a case where a notification that the bathtub water has been heated is obtained from the water heater 163, the home console system makes a response of "The bathtub water has been heated" to the user.

Note that, in the case where the bath is in the available state, the home console system makes a response to the user that the bath is available.

### (Second Example)

U: "Is the bath ready?"
S: "xxxx seems using the bath".

In the second example of the bath operation at home, the home console system has recognized that the intention of the user's utterance is to "confirm the state of the bath", similarly to the above-described first example but recognizes that another family member is using the bath from the analysis result of the sensor information obtained from the sensor 162, and makes a response of "xxxx seems using the bath" to the user.

### (Third Example)

U: "Is the bath ready?"
S: "The bathtub water has been heated at xx:00. Two have already taken the bath.
It's 36°C now. Would you like to re-heat the bathtub water?"
U: "Re-heat the bathtub water".
S: "Starting re-heating the bathtub water".

In a third example of the bath operation at home, the home console system has recognized that the intention of the user's utterance is to "confirm the state of the bath", similarly to the above-described first example and recognizes whether or not the bath is in the available state such as the state of the bath, whether or not another family member is taking the bath, and the like, on the basis of an inquiry result (device information) from the water heater 163 and the analysis result of the sensor information obtained from the sensor 162.

At this time, the home console system can propose the functions such as re-heating or adding the bathtub water, keeping the bathtub water warm, and the like to the user according to the state of the bath in the case where the bath is in the available state. For example, in a case where a certain time has elapsed since the bathtub water was heated, and the water temperature has decreased due to other family members taking the bath, the home console system makes a response (proposal) of "Would you like to re-heat the bathtub water?" to the user. Note that the bath temperature can be changed for each user.

In a case where the user has uttered "Re-heat the bathtub water" to the response, the home console system recognizes that the intention of the user's utterance is to "give an instruction for re-heating", and causes the water heater 163 to re-heat the bathtub water. Furthermore, the home console system responds to the user with "Starting re-heating the bathtub water".

### (K) Example of reminder function for shopping (time: around 10:00 on holidays, place: entrance)

Next, an example of an interaction sequence between the user and the home console system in a case where the user registers a reminder so as not to forget what to buy before going out at the entrance 102 at around 10:00 on holidays.

### (First Example)

U: "Don't forget the cat sand".
S: "Understood".

### <<Going out>>

S: "The last store where you can buy the cat sand".

In a first example of the reminder function, the home console system recognizes that the intention of the user's utterance is to "register a schedule of purchasing cat sand" from the user's utterance of "Don't forget the cat sand". Then, the home console system registers the schedule of "purchasing cat sand" to the schedule DB 33 and makes a response of "Understood".

Furthermore, to implement the reminder function for the user's registered schedule, the home console system acquires store information regarding stores where "cat sand" published on a website on the Internet can be purchased, for example. Then, the home console system performs an analysis (performs tracking of the position information of the user) for confirming whether or not the user has been moving to the neighborhood of a store's place specified from the store information on the basis of the position information (GPS information) obtained from the mobile terminal device 50 possessed by the user who is out of the house and the user action log.

In a case where the home console system has not been able to sense a purchase action of the "cat sand" by the user coming home according to a result of the analysis using the position information and the user action log, the home console system notifies the mobile terminal device 50 of a message (reminder). Here, for example, when the user approaches the neighborhood of a store's place closest to the home among stores where the "cat sand" is purchasable on the user's way home from a place outside the house, the home console system can notifies the mobile terminal device 50 of a message of "The last store where you can buy the cat sand".

Thereby, the user can reliably purchase a desired product at a store near the house, and thus the effort of bringing the product home can be minimized.

Note that, as the method of notifying the mobile terminal device 50 possessed by the user of the message, not only the notification using sound but also notification using text information or a vibration function can be used. Furthermore, here, an example of recommending the store closest to the user's house has been described. However, other conditions may be used such as recommending a store where the desired product is sold at a lowest price.

### (Second Example)

UA: "Don't forget the cat sand".
S → U_{A}: "Understood".

### <<Going out>>

S → UB: "You have a message of "Don't forget the cat sand"".
S → Uc: "You have a message of "Don't forget the cat sand"".
S → UA: "The last store where you can buy the cat sand".

Note that, in a second example of the reminder function, "U" represents a user's utterance. Here, in a case where a certain family has three family members of user A, user B, and user C, the user A's utterance is represented by "U_{A}", and responses from the home console system to the user A, user B, and user C are represented by "S→U_{A}", "S→U_{B}", and "S→U_{C}", respectively.

In the second example of the reminder function, the home console system recognizes that the intention of the user's utterance is to "register a schedule of purchasing cat sand", similarly to the above-described first example, and registers a schedule and makes a response of "Understood".

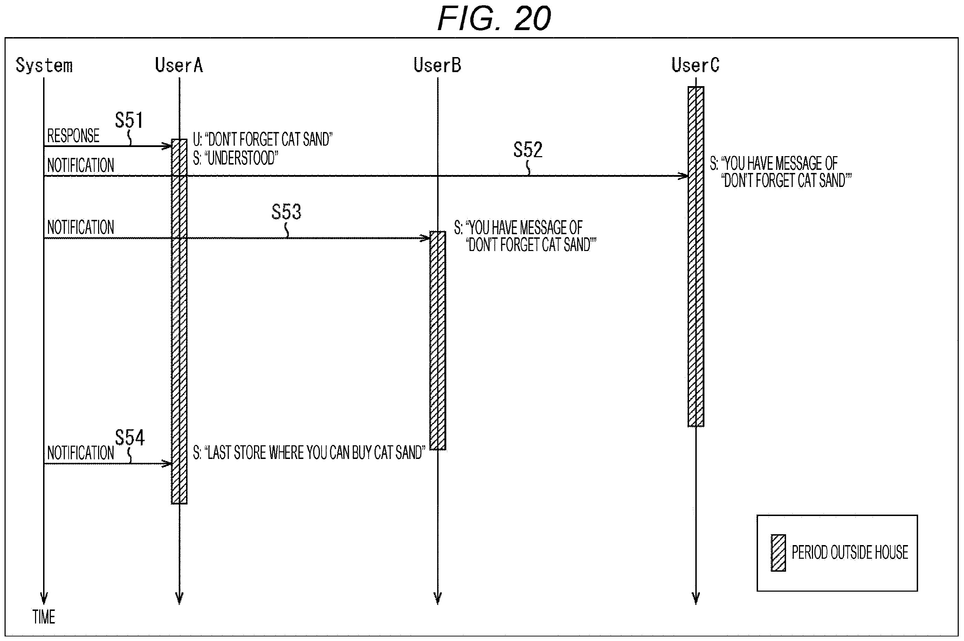

Here, the home console system enables a similar reminder function to be effective when the user B and the user C who are family members other than the user A go out. Fig. 20 illustrates an interaction sequence of a second example of the reminder function.

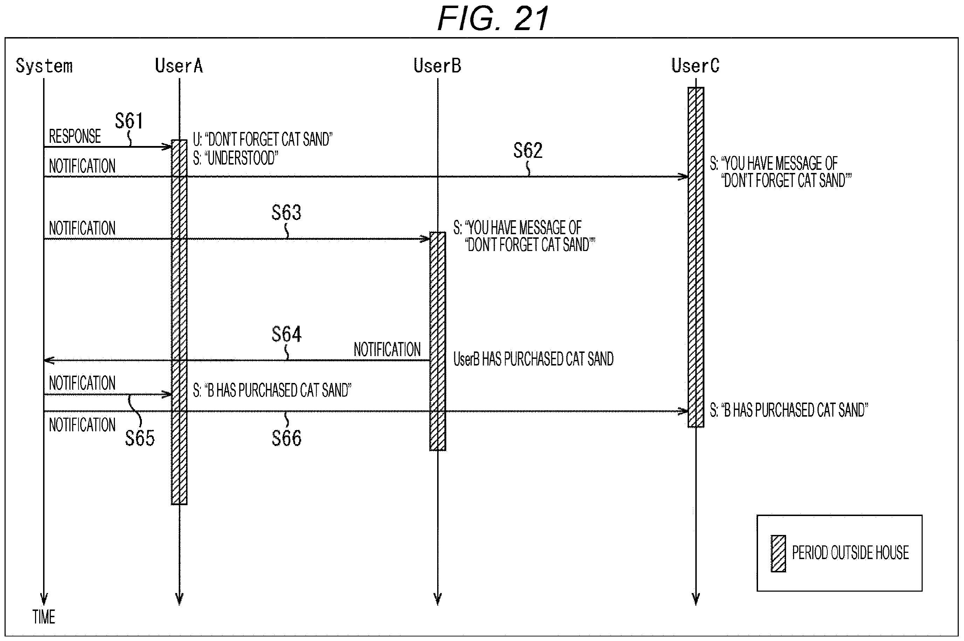

In Fig. 20, "System" represents the home console system, "UserA" represents the user A, and "UserB" and "UserC" represent family members (the users B and C) of the user A. Furthermore, in Fig. 20, a time direction is a direction from an upper side to a lower side in Fig. 20, and a hatched section in Fig. 20 represents a time zone when the user or another family member is out. Note that the above relationship is similarly applied to Fig. 21 to be described below.

In a case where the user A has uttered "Don't forget the cat sand", the home console system registers the schedule of purchasing the cat sand and makes a response of "Understood" (S51). Furthermore, the home console system notifies a mobile terminal device 50C possessed by the user C who is already out of the house of a message of "You have a message of "Don't forget the cat sand"" via the network (S52).

At this time, the user B is in the house 100 but the home console system notifies the user B of the message of "You have a message of "Don't forget the cat sand"" when the user B goes out (S53). As a result, the message of "Don't forget the cat sand" is shared within the family.

Thereafter, when the user A who is out of the house approaches the neighborhood of a store S where the cat sand is purchasable, the home console system confirms that the user A is near the store S on the basis of the position information of the user A and the store information regarding the store S, and notifies the mobile terminal device 50A possessed by the user A of the message of "The last store where you can buy the cat sand" (S54).

As describe above, since the remind function is shared by other family members when the remind function for purchasing a desired product is used by one member of the family, even if one of the family members has forgotten to purchase the desired product, another member confirms the message from the system and can purchase the desired product. Therefore, the probability of forgetting to purchase a desired product when going out can be reduced.

### (Third Example)

UA: "Don't forget the cat sand".
S → U_{A}: "Understood".

### <<Going out>>

S → UB: "You have a message of "Don't forget the cat sand"".
S → Uc: "You have a message of "Don't forget the cat sand"".

### <<Purchased by U_{B}>>

S → U_{A}: "U_{B} has bought the cat sand".
S → U_{C}: "U_{B} has bought the cat sand".

In a third example of the reminder function, the home console system recognizes that the intention of the user's utterance is to "register a schedule of purchasing cat sand", similarly to the above-described first example, and registers a schedule and makes a response of "Understood".

Here, the home console system enables a similar reminder function to be effective when the user B and the user C who are family members other than the user A go out. Fig. 21 illustrates an interaction sequence of a third example of the reminder function.

In Fig. 21, in a case where the user A has uttered "Don't forget the cat sand", the home console system records the content of the utterance and makes a response of "Understood" (S61). Furthermore, the home console system notifies a mobile terminal device 50C possessed by the user C who is out of the house of a message of "You have a message of "Don't forget the cat sand"" via the network (S62).

At this time, the user B is in the house 100 but the home console system notifies the user B of the message of "You have a message of "Don't forget the cat sand"" when the user B goes out (S63). As a result, the message of "Don't forget the cat sand" is shared within the family.

Thereafter, when the user B who went out last has purchased the cat sand at a certain store S, the mobile terminal device 50B possessed by the user B notifies the home console system of a purchase message indicating that the cat sand has been purchased via the network (S64). The home console system is notified of this purchase message, for example, on the basis of the position information obtained from the mobile terminal device 50B, the user action log of the user B, an explicit instruction by the user B, and the like.

The home console system receives the purchase message from the mobile terminal device 50B possessed by the user B, and recognizes that the user B has purchased the cat sand. Then, the home console system notifies the mobile terminal device 50A possessed by the user A and the mobile terminal device 50C possessed by the user C of the message of "the user B has bought the cat sand" (S65 and S66).

As describe above, since the remind function is shared by other family members when the remind function for purchasing a desired product is used by one member of the family, the desired product can be reliably purchased. Furthermore, in a case where one of the family members has purchased the desired product, the other family members are notified of the fact (executed content). Therefore, for example, purchasing the same desired product again can be prevented in advance.

### (Fourth Example)

U: "There is no laundry detergent".
S: "The last purchase was 1 month ago. The laundry detergent seems to be little".

### <<Going out>>

S: "There is no purchase history. Better to purchase the laundry detergent, isn't it?"

In a fourth example of the reminder function, the home console system recognizes that the intention of the user's utterance is to "confirm the remaining amount of the laundry detergent" from the user's utterance of "There is no laundry detergent". The home console system confirms a laundry detergent purchase history from the user action log recorded on the action history DB 32, and estimates the remaining amount of the laundry detergent from the number of washings, a use period, and the like, in a case where the laundry detergent purchase history is present.

Then, the home console system makes a response of "The last purchase was 1 month ago. The laundry detergent seems to be little" to the user according to the estimated remaining amount of the laundry detergent. Furthermore, in a case where the user has not performed the action to purchase the laundry detergent, the home console system can prompt the purchase of the laundry detergent, notifying the mobile terminal device 50 of the message, on the basis of the position information of the user.

Note that, in a case where the user has purchased the laundry detergent under a situation where the laundry detergent purchase history cannot be acquired from the action history DB 32, the user makes a purchased input to the home console system, thereby receiving the service described in the fourth example.

### (L) Example of schedule confirmation at home (time: around 7:00 on weekdays, place: entrance)

Next, an example of an interaction sequence between the user and the home console system in a case of confirming a schedule according to a user's utterance at the entrance at 7:00 on weekday mornings.

### (First Example)

U: "What time can I come home?"
S: "You seems to come home at 21:30".

In a first example of the schedule confirmation, the home console system recognizes that the user is at the entrance 102 in the house 100 from the sensor information obtained from the sensors in the house 100 and the position information obtained from the mobile terminal device 50 possessed by the user.

Furthermore, the home console system recognizes that the intention of the user's utterance of "What time can I come home?" is to "confirm the schedule", and acquires an end time and a place of the last schedule of the day from the user's schedule information of the day recorded in advance.

Then, the home console system predicts the time when the user comes home using the end time of the last scheduled of the day, the user action log recorded in the action history DB 32, and the like, and makes a response to the user.

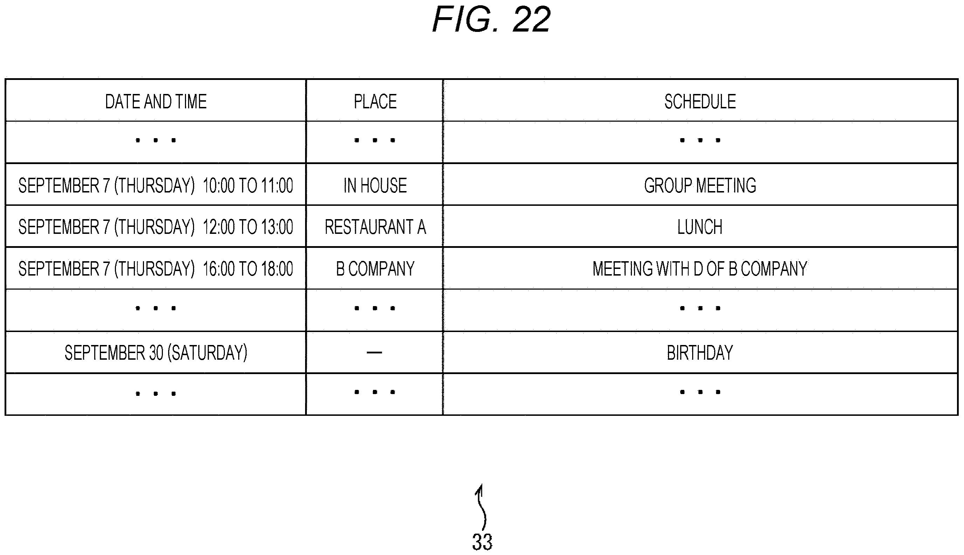

Fig. 22 illustrates an example of the schedule information recorded in the schedule DB 33. In Fig. 22, as the user's schedule on September 7 (Thursday), an in-house group meeting on 10:00-11:00, a lunch at a restaurant A on 12:00-13:00, and a meeting with D of B company at the B company on 16:00-18:00 are registered.

The home console system predicts that the time from the B company to home is about one hour by recognizing the end time of 18:00 and the place that is the B company regarding the meeting with D of B company that is the user's last schedule on September 7 (Thursday) on the basis of the schedule information illustrated in Fig. 22.

Here, in predicting the time when the user comes home, the home console system can use the user action log recorded in the action history DB 32. For example, the home console system can predict the time when the user comes home with more accuracy by considering the content of the schedule and information regarding the partner of the schedule, using time modification information obtained from the user action log, in addition to the end time of the last schedule of the day. As the time modification information, for example, information for modifying the end time of the last schedule of the day, as described below, can be obtained.

### (Time modification information)

After the meeting with D of the B company, a drinking party or the like goes long and the time to come home is delayed by more than 2 hours.

Drinking parties with D of the B company are often held at a tavern C.

The home console system calculates, as the modified end time of the last schedule, 20:00 delayed by about two hours according to the time modification information from 18:00 that is the end time of the "meeting with D of B company" as the last schedule. Furthermore, here, the time from the tavern C to home is recalculated to about one and half hours.

Then, the home console system calculates, as a modified time when the user comes home, 21:30 obtained by adding one and half hours to 20:00 as the end time of the last schedule, and makes a response of "You seems to come home at 21:30" to the user.

### (Second Example)

U: "What time can I come home?"
S: "The last schedule for today seems to end at 20:00".

In a second example of the schedule confirmation, the home console system recognizes that the end time of the meeting with D of the B company as the last schedule of the day is 18:00 according to the user's utterance, similarly to the above-described first example. Furthermore, the home console system recognizes that the drinking party is performed after the meeting with D of the B company, and the end time is delayed by about two hours according to the time modification information, but assuming a case where the home console system cannot recognize the place of the drinking party.

In this case, the home console system calculates, as the modified end time of the last schedule, 20:00 delayed by about two hours from 18:00 that is the end time of the "meeting with D of B company" as the last schedule, and makes a response of "The last schedule for today seems to end at 20:00" to the user, which is obtained by combining the title of the last schedule of the day and the end time.

As described above, the home console system can notify the user of more accurate time information by modifying the time information to be presented to the user, using the time modification information obtained from the user action log.

### (Third Example)

U: "I'm going to Shinagawa".
S: "Take care".
U: "I'll back at 6:00".
S: "Understood".

### <<User's family member has come home>>

U: "xxxx went to Shinagawa. xxxx will be back at 18:00".

In a third example, the home console system recognizes that the intention of the user's utterances of "I'm going to Shinagawa" and "I'll back at 6:00" is to "register the schedule", and records the schedule as schedule information to the schedule DB 33. Thereafter, in a case where the home console system has recognized that a family member of the user has come home on the basis of the sensor information and the like, the home console system makes a response of "xxxx went to Shinagawa. xxxx will be back at 18:00" to the family member of the user on the basis of the schedule information recorded in the schedule DB 33.

Note that wording of the time information or the like may be corrected according to the user, such as converting "6:00" to "18:00" in the response of the home console system. Furthermore, in a case where the family member of the user is at home and can listen to a message, the home console system does not need to take an action. However, in a case where the family member of the user actively utters a question (for example, "Where has the user gone?") even in the case where the family member is at home, the home console system performs a similar feedback to the above-described third example.

As described above, according to the present technology, in the case where a plurality of devices (home appliances) connected to the home network is controllable, a device in accordance with the user's intention is controlled according to the user's utterance, and a response is made. As a result, a response in accordance with the intention of the user can be made.

Note that the conventional voice operation technology is incorporated for each operation target device, and only utterance content and vocabulary necessary for operating the operation target device are accepted. Furthermore, in a case where the user wants to operate the operation target device, the user needs to provide the operation target device with an explicit instruction for starting the operation. This explicit instruction may be, for example, a plosive sound by clapping the hands or a call using a specific keyword.

Then, the conventional operation function for the operation target device corresponds only to the content that the user wants to execute the operation immediately, and provides the result or present the result under applicable conditions by inputting in advance the conditions in which the user wants to execute the operation.

Here, in a situation where the operation target device is operated by voice, the user does not necessarily specify a target to be operated or set a condition. For example, it is often the case that the user utters only an operation request such as "turn on power" or "turn it off".

In the present technology, in a case where the operation target device that the user wants to operate is not explicitly specified or a case where the operation conditions are not specified, what the user wants to do is estimated and executed according to the current state of the user, the user action log recorded in the action history DB 32, and the utterance content of the user, whereby a stress-less voice device operation can be implemented for the user.

### <2. Modification>

### (Other Configuration Examples of Home Console System)

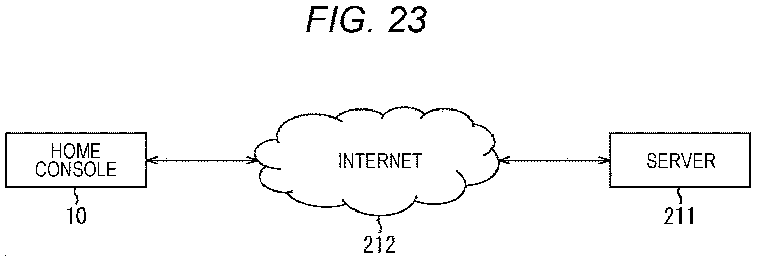

In the above-described description, an example in which the processing is executed by (the processing unit 11) of the home console 10 and the operation target device 41 is controlled, whereby the home console system is implemented, has been described. However, as a configuration for implementing such a home console system, a configuration illustrated in Fig. 23 can be adopted, for example.

In Fig. 23, the home console system is configured by the home console 10 installed on a local side such as the house 100 and functioning as a user interface of the system, and a server 211 installed on a cloud side such as a data center and configured to perform substantial processing for implementing the system.

In the home console system in Fig. 23, the home console 10 and the server 211 are connected to each other via the Internet 212.

The home console 10 is a speaker connectable to a network such as a home LAN and is also referred to as, for example, a so-called smart speaker or home agent. The home console 10 can provide the user with the user interface of the home console system in cooperation with the server 211 via the Internet 212.

That is, the home console 10 collects a voice (user's utterance) uttered by the user and transmits voice data corresponding to a voice signal to the server 211 via the Internet 212. Furthermore, the home console 10 receives processed data transmitted from the server 211 via the Internet, and performs processing according to the processed data (for example, controls the operation target device 41).

The server 211 is a server for providing a cloud-based home console system. The server 211 performs processing such as voice recognition processing and interaction control processing on the basis of the voice data transmitted from the home console 10 via the Internet 212, and transmits processed data obtained as a result of the processing to the home console 10 via the internet 212.

Here, the voice recognition processing is, for example, processing for converting the voice signal into text information. Furthermore, the interaction control processing is processing for making a response according to user's intention (for example, processing for obtaining control information for controlling a device in accordance with the user's intention) on the basis of a voice recognition result (text information) obtained by the voice recognition processing, for example. Note that the server 211 may use a voice recognition result obtained using another voice recognition service without executing the voice recognition processing.

That is, the above description has been made such that the functions (the utterance content classification unit 21 to the execution determination/operation command issuance unit 27) of the processing unit 110 in Fig. 1 are incorporated in the home console 10. However, the functions of the processing unit 110 in Fig. 1 may be incorporated as functions of the server 211. In other words, each of the functions (the utterance content classification unit 21 to the execution determination/operation command issuance unit 27) of the processing unit 110 in Fig. 1 may be incorporated in either the home console 10 or the server 211.

For example, the utterance content classification unit 21, the key phrase extraction unit 22, the knowledge information processing unit 23, the state estimation unit 25, and the operation selection unit 26, of the functions of the processing unit 110 in Fig. 1, can be incorporated in the cloud-side server 211, and the sensor information acquisition unit 24 and the execution determination/operation command issuance unit 27 can be incorporated in the local-side home console 10.

Note that the databases such as the knowledge information DB 31, the action history DB 32, and the schedule DB 33 can be managed by the server 211 on the internet 212 regardless of which configuration is adopted.

As described above, in the present technology, a configuration of cloud computing in which one function is shared and processed in cooperation by a plurality of devices via a network can be adopted.

### (Configuration Example of Home Console)

Furthermore, in the above description, the hardware configuration of the home console 10 has not been particularly described. However, for example, the following configuration may be adopted. That is, since the home console 10 is configured as, for example, a smart speaker, the home console 10 can include, for example, a microphone, a speaker, a communication I/F, and the like, in addition to a CPU, a memory, and the like.

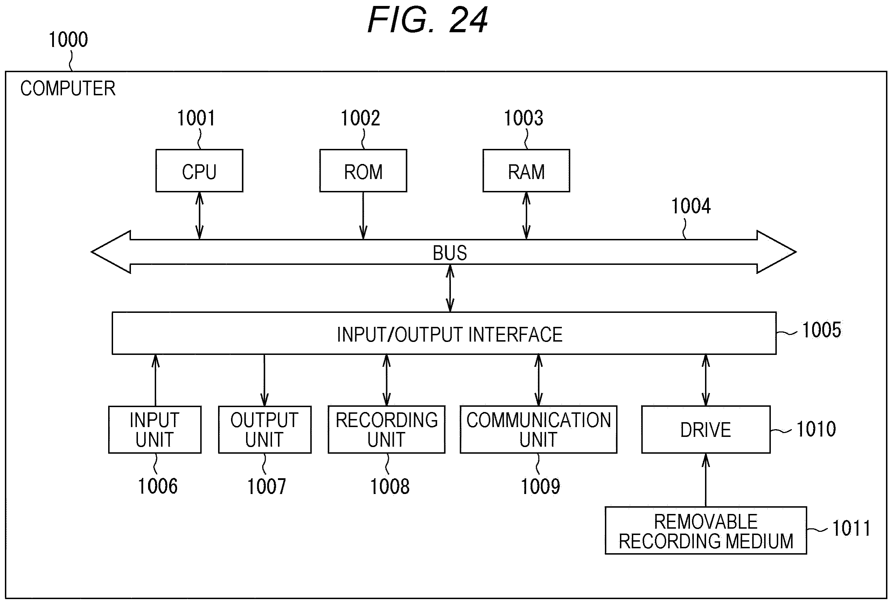

For example, as illustrated in the configuration of the computer in Fig. 24, the home console 10 includes a CPU 1001, and the CPU 1001 executes a program recorded in a ROM 1002 or a recording unit 1008, so that the functions (the utterance content classification unit 21 to the execution determination/operation command issuance unit 27) of the processing unit 110 in Fig. 1 are implemented. Furthermore, the home console 10 can include an input unit 1006 including a microphone, an output unit 1007 including a speaker, and a communication unit 1009 as a communication I/F that can be connected to a home LAN or the Internet.

### (Other Modifications)

The home console system does not only wait for an instruction from the user but also can appropriately present information to the user. For example, when the user is cleaning using a vacuum cleaner, the home console system may provide notification of a message such as "The suction power of the vacuum cleaner is low". Furthermore, the home console system may notify the user of "replacement of garbage bags" by confirming the power consumption of the vacuum cleaner.

Furthermore, for example, when the user is about to turn on cooling of an air conditioner 112 or the like, the home console system may provide notification of a massage such as "The outside air seems to be cooler" to suggest alternatives other than the cooling on the basis of information such as outside temperature or air volume obtained from a weather site on the Internet or sensor information from a sensor provided outdoors.

In the above description, the home console system implemented as a voice interaction system has been described. However, the text information input by the user by text chat instead of the user's utterance may be used. In this case, since text information is input to the home console 10, it is not necessary to perform the voice recognition processing.

Furthermore, in the above description, description has been made such that, in the home console 10, the operation target device uniquely specified according to the operation probability is selected by the operation selection unit 26 of the processing unit 11. However, the number of the selected operation target devices is not limited to one and may be plural. For example, in a case where a "playback instruction of video content recorded on the recorder 115" has been made by the user, the home console 10 selects the television 114 and the recorder 115 as the operation target devices in a case where the television 114 is not powered on. Note that, in the above description, the water heater 163 installed in the bathroom 106 is also included in the home appliance (electric machinery and appliance).

### <3. Configuration of Computer>

The above-described series of processing (the target device control processing according to an interaction illustrated in Fig. 3, for example) can be executed by hardware or software. In the case of executing the series of processing by software, a program that configures the software is installed in a computer of each device. Fig. 24 is a block diagram illustrating a configuration example of hardware of a computer that executes the above-described series of processing by a program.

In a computer 1000, a central processing unit (CPU) 1001, a read only memory (ROM) 1002, and a random access memory (RAM) 1003 are mutually connected by a bus 1004. Moreover, an input/output interface 1005 is connected to the bus 1004. An input unit 1006, an output unit 1007, a recording unit 1008, a communication unit 1009, and a drive 1010 are connected to the input/output interface 1005.

The input unit 1006 includes a microphone, a keyboard, a mouse, and the like. The output unit 1007 includes a speaker, a display, and the like. The recording unit 1008 includes a hard disk, a nonvolatile memory, and the like. The communication unit 1009 includes a network interface and the like. The drive 1010 drives a removable recording medium 1011 such as a magnetic disk, an optical disk, a magnetooptical disk, or a semiconductor memory.

In the computer 1000 configured as described above, the CPU 1001 loads the program recorded in the ROM 1002 or the recording unit 1008 to the RAM 1003 via the input/output interface 1005 and the bus 1004 and executes the program, so that the above-described series of processing is performed.

The program to be executed by the computer 1000 (CPU 1001) can be recorded on the removable recording medium 1011 as a package medium or the like, for example, and can be provided. Furthermore, the program can be provided via a wired or wireless transmission medium such as a local area network, the Internet, or digital satellite broadcasting.

In the computer 1000, the program can be installed to the recording unit 1008 via the input/output interface 1005 by attaching the removable recording medium 1011 to the drive 1010. Furthermore, the program can be received by the communication unit 1009 via a wired or wireless transmission medium and installed in the recording unit 1008. Other than the above method, the program can be installed in the ROM 1002 or the recording unit 1008 in advance.

Here, in the present specification, the processing performed by the computer in accordance with the program does not necessarily have to be performed in chronological order in accordance with the order described as the flowchart. In other words, the processing performed by the computer according to the program also includes processing executed in parallel or individually (for example, parallel processing or processing by an object). Furthermore, the program may be processed by one computer (processor) or distributed in and processed by a plurality of computers.

Note that embodiments of the present technology are not limited to the above-described embodiments, and various modifications can be made without departing from the gist of the present technology.

Furthermore, the steps of the target device control processing according to the interaction illustrated in Fig. 3 can be executed by one device or can be shared and executed by a plurality of devices. Furthermore, in the case where a plurality of processes is included in one step, the plurality of processes included in the one step can be executed by one device or can be shared and executed by a plurality of devices.

Note that the present technology can employ the following configurations.
(1) An information processing device including:
   a processing unit configured to calculate a selection probability used when selecting a selection target according to an intention of a user on the basis of utterance information regarding an utterance of the user obtained from an interaction with the user, and select the selection target from among selection target candidates according to the selection probability.
(2) The information processing device according to (1), in which
   the processing unit calculates the selection probability on the basis of at least either the utterance information or state information indicating a current state of the user or a surrounding state of the user.
(3) The information processing device according to (2), in which
   the processing unit calculates the selection probability on the basis of at least one of the utterance information, the state information, or action history information indicating an action history of the user.
(4) The information processing device according to (3), in which
   the processing unit selects an operation target device uniquely specified according to an operation probability of each operation candidate device from among operation candidate devices serving as candidates of operation target devices according to the intention of the user.
(5) The information processing device according to (4), in which
   the processing unit
   dynamically updates the operation probability on the basis of at least one of the utterance information repeatedly obtained according to the interaction with the user, the state information, or the action history information, and
   selects the operation target device from among the operation candidate devices according to the updated operation probability.
(6) The information processing device according to (5), in which
   the processing unit updates the operation probability on the basis of new utterance information obtained by responding to the user in a case where the operation target device is not able to be uniquely specified.
(7) The information processing device according to (6), in which
   the processing unit acquires the new utterance information by making an inquiry for uniquely specifying the operation target device to the user.
(8) The information processing device according to (7), in which
   the processing unit includes a state of the operation candidate device at a point of time of the inquiry as the inquiry to the user.
(9) The information processing device according to (7) or (8), in which
   the processing unit includes the operation candidate device selectable at a point of time of the inquiry as the inquiry to the user.
(10) The information processing device according to any one of (4) to (9), in which
   the processing unit controls an operation of the selected operation target device.
(11) The information processing device according to (10), in which
   the processing unit
   determines operation content of the selected operation target device on the basis of device information regarding the selected operation target device and the intention of the user, and
   controls the operation of the operation target device according to the determined operation content.
(12) The information processing device according to (11), in which,
   in a case of determining not to immediately execute the operation of the operation target device, the processing unit modifies or redetermines the operation content on the basis of the state information obtained after the determination.
(13) The information processing device according to (12), in which
   the processing unit performs a feedback to the user according to the state information, and modifies or redetermines the operation content on the basis of utterance information obtained from an utterance of the user to the feedback.
(14) The information processing device according to any one of (11) to (13), in which,
   in a case of determining to immediately execute the operation of the operation target device, the processing unit controls the operation of the operation target device.
(15) The information processing device according to any one of (11) to (14), in which
   the state information includes position information indicating a current position of the user, and
   the processing unit controls the operation of the operation target device on the basis of the operation content and the position information.
(16) The information processing device according to any one of (1) to (15), in which
   the processing unit calculates the selection probability on the basis of the utterance information and registration information registered by the user.
(17) The information processing device according to any one of (1) to (15), in which
   the processing unit estimates the state information on the basis of sensor information obtained from a sensing result by various sensors.
(18) The information processing device according to any one of (3) to (15), in which
   the action history information further includes an action history of another user different from the user.
(19) The information processing device according to any one of (4) to (15), in which
   the information processing device is a home console, and
   the operation target device includes a home appliance connected to the home console via a home network.
(20) An information processing method of an information processing device, the information processing method, by the information processing device, including:
   calculating a selection probability used when selecting a selection target according to an intention of a user on the basis of utterance information regarding an utterance of the user obtained from an interaction with the user; and selecting the selection target from among selection target candidates according to the selection probability.

### REFERENCE SIGNS LIST

- 10: Home console
- 21: Utterance content classification unit
- 22: Key phrase extraction unit
- 23: Knowledge information processing unit
- 24: Sensor information acquisition unit
- 25: State estimation unit
- 26: Operation selection unit
- 27: Execution determination/operation command issuance unit
- 31: Knowledge information DB
- 32: Action history DB
- 33: Schedule DB
- 41: Operation target device
- 111: Light
- 112: Air conditioner
- 113: Outlet
- 114: Television
- 115: Recorder
- 116: Game machine
- 117: Sensor
- 121: Light
- 122: Sensor
- 131: Light
- 132: Sensor
- 133: Refrigerator
- 141: Light
- 142: Air conditioner
- 143: Outlet
- 144: PC
- 145: Sensor
- 151: Light
- 152: Heater
- 153: Outlet
- 154: Lamp
- 155: Sensor
- 161: Light
- 162: Sensor
- 163: Water heater
- 211: Server
- 212: Internet
- 1000: Computer
- 1001: CPU

## Claims

1. An information processing device comprising:
a processing unit configured to calculate a selection probability used when selecting a selection target according to an intention of a user on a basis of utterance information regarding an utterance of the user obtained from an interaction with the user, and select the selection target from among selection target candidates according to the selection probability.

2. The information processing device according to claim 1, wherein
the processing unit calculates the selection probability on a basis of at least either the utterance information or state information indicating a current state of the user or a surrounding state of the user.

3. The information processing device according to claim 2, wherein
the processing unit calculates the selection probability on a basis of at least one of the utterance information, the state information, or action history information indicating an action history of the user.

4. The information processing device according to claim 3, wherein
the processing unit selects an operation target device uniquely specified according to an operation probability of each operation candidate device from among operation candidate devices serving as candidates of operation target devices according to the intention of the user.

5. The information processing device according to claim 4, wherein
the processing unit
dynamically updates the operation probability on a basis of at least one of the utterance information repeatedly obtained according to the interaction with the user, the state information, or the action history information, and
selects the operation target device from among the operation candidate devices according to the updated operation probability.

6. The information processing device according to claim 5, wherein
the processing unit updates the operation probability on a basis of new utterance information obtained by responding to the user in a case where the operation target device is not able to be uniquely specified.

7. The information processing device according to claim 6, wherein
the processing unit acquires the new utterance information by making an inquiry for uniquely specifying the operation target device to the user.

8. The information processing device according to claim 7, wherein
the processing unit includes a state of the operation candidate device at a point of time of the inquiry as the inquiry to the user.

9. The information processing device according to claim 7, wherein
the processing unit includes the operation candidate device selectable at a point of time of the inquiry as the inquiry to the user.

10. The information processing device according to claim 4, wherein
the processing unit controls an operation of the selected operation target device.

11. The information processing device according to claim 10, wherein
the processing unit
determines operation content of the selected operation target device on a basis of device information regarding the selected operation target device and the intention of the user, and
controls the operation of the operation target device according to the determined operation content.

12. The information processing device according to claim 11, wherein,
in a case of determining not to immediately execute the operation of the operation target device, the processing unit modifies or redetermines the operation content on a basis of the state information obtained after the determination.

13. The information processing device according to claim 12, wherein
the processing unit performs a feedback to the user according to the state information, and modifies or redetermines the operation content on a basis of utterance information obtained from an utterance of the user to the feedback.

14. The information processing device according to claim 11, wherein,
in a case of determining to immediately execute the operation of the operation target device, the processing unit controls the operation of the operation target device.

15. The information processing device according to claim 11, wherein
the state information includes position information indicating a current position of the user, and
the processing unit controls the operation of the operation target device on a basis of the operation content and the position information.

16. The information processing device according to claim 1, wherein
the processing unit calculates the selection probability on a basis of the utterance information and registration information registered by the user.

17. The information processing device according to claim 2, wherein
the processing unit estimates the state information on a basis of sensor information obtained from a sensing result by various sensors.

18. The information processing device according to claim 3, wherein
the action history information further includes an action history of another user different from the user.

19. The information processing device according to claim 4, wherein the information processing device is a home console, and
the operation target device includes a home appliance connected to the home console via a home network.

20. An information processing method of an information processing device, the information processing method, by the information processing device, comprising:
calculating a selection probability used when selecting a selection target according to an intention of a user on a basis of utterance information regarding an utterance of the user obtained from an interaction with the user; and selecting the selection target from among selection target candidates according to the selection probability.
